(19) Europäisches Patentamt
European Patent Office
Office européen des brevets

(11) **EP 4 574 604 A1**

(12) **EUROPEAN PATENT APPLICATION**

(43) Date of publication:
**25.06.2025 Bulletin 2025/26**

(21) Application number: **24214909.4**

(22) Date of filing: **22.11.2024**

(51) International Patent Classification (IPC):
**B60W 30/095** $^{(2012.01)}$    **B60W 30/18** $^{(2012.01)}$

(52) Cooperative Patent Classification (CPC):
**B60T 7/22; B60W 30/095; B60W 30/0956;
B60W 30/18154; B60W 30/18159;** B60T 2201/022

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.12.2023 JP 2023213258**

(71) Applicant: **TOYOTA JIDOSHA KABUSHIKI
KAISHA
Toyota-shi
Aichi 471-8571 (JP)**

(72) Inventors:
• **KOBAYASHI, Makoto
TOYOTA-SHI, AICHI, 471-8571 (JP)**
• **NOZAWA, Toyohito
TOKYO, 103-0022 (JP)**

(74) Representative: **Cabinet Beau de Loménie
103, rue de Grenelle
75340 Paris Cedex 07 (FR)**

(54)    **VEHICLE CONTROL DEVICE**

(57)    A vehicle control device (1) includes a vehicle control ECU (10) configured to start deceleration control of controlling a braking device (40) when a probability of collision between an own vehicle (100) and a crossing target (200) is high, and to finish the deceleration control when a predetermined control finish condition is satisfied. The control finish condition includes an avoidance condition satisfaction or dissatisfaction of which is determined when the crossing target (200) is before crossing a predicted travel region (A100) of the own vehicle (100) and the own vehicle (100) and the crossing target (200) are moving. The avoidance condition is satisfied when a predetermined condition is satisfied. The predetermined condition is set based on an own vehicle passage (100) predicted time (T1) that is a predicted time taken by the own vehicle (100) to pass beyond an intersecting region (CA) and a crossing target (200) reaching predicted time (T2) that is a predicted time taken by the crossing target (200) to reach the intersecting region (CA).

FIG.5

**Description**

BACKGROUND

1. Technical Field

The present disclosure relates to a vehicle control device capable of executing deceleration control.

2. Description of the Related Art

There has been known a vehicle control device capable of executing deceleration control of controlling a braking device of an own vehicle such that the own vehicle decelerates when a probability of collision between the own vehicle and a crossing target predicted to cross a predicted travel region of the own vehicle is high (for example, see Japanese Patent Application Laid-open No. 2018-111335).

Related-art vehicle control devices (hereinafter sometimes referred to as "related-art devices") including the vehicle control device as disclosed in Japanese Patent Application Laid-open No. 2018-111335 and capable of executing the deceleration control for the crossing target finishes the deceleration control when the collision between the own vehicle and the crossing target is reliably avoided during the execution of the deceleration control. For example, the deceleration control is finished when the crossing target is stopped or the crossing target has already crossed the predicted travel region of the own vehicle. However, when the position of the crossing target is a position before crossing the predicted travel region of the own vehicle and the own vehicle and the crossing target are moving, there is a possibility that the own vehicle and the crossing target collide with each other depending on a subsequent behavior of the crossing target, and hence the deceleration control is not finished.

Incidentally, the crossing target may move while reducing a speed thereof without stopping before crossing the predicted travel region of the own vehicle in order to allow the own vehicle to first pass beyond the predicted travel region. In this case, the vehicle control device should finish the deceleration control, to thereby allow the own vehicle to first pass beyond the predicted travel region. However, as described above, the related-art devices do not finish the deceleration control when the crossing target is moving at the position before crossing the predicted travel region of the own vehicle. Thus, there is a problem in that the deceleration control is activated even when continuation of the deceleration control is not required.

SUMMARY

The present disclosure has an object to provide a vehicle control device capable of solving the above-mentioned problem. That is, the present disclosure has an object to provide a vehicle control device capable of suppressing continuation of deceleration control when the continuation of the deceleration control is not required.

According to at least one embodiment of the present disclosure, there is provided a vehicle control device including: a braking device configured to brake an own vehicle; and a control unit configured to start deceleration control of controlling the braking device such that the own vehicle decelerates when the control unit determines that a probability of collision between the own vehicle and a crossing target that is a target predicted to cross a predicted travel region of the own vehicle is high, and to finish the deceleration control when a predetermined control finish condition is satisfied during the execution of the deceleration control. Further, the predetermined control finish condition includes an avoidance condition which is a condition satisfaction or dissatisfaction of which is determined when a position of the crossing target is a position before crossing the predicted travel region of the own vehicle and the own vehicle and the crossing target are moving, and which is satisfied when a predetermined condition is satisfied. The predetermined condition is set based on an own vehicle passage predicted time that is a predicted time taken by the own vehicle to pass beyond an intersecting region, which is an intersection of the predicted travel region of the own vehicle and a predicted movement region of the crossing target, and a crossing target reaching predicted time that is a predicted time taken by the crossing target to reach the intersecting region.

With the vehicle control device according to the at least one embodiment of the present disclosure, even when the position of the crossing target is the position before crossing the predicted travel region of the own vehicle and the own vehicle and the crossing target are moving, the avoidance condition is satisfied when the condition set based on the time taken by the own vehicle to pass beyond the intersecting region and the time taken by the crossing target to reach the intersecting region is satisfied. Moreover, the control unit determines that the control finish condition is satisfied when the avoidance condition is satisfied during the execution of the deceleration control, and finishes the deceleration control. Thus, it is possible to suppress the continuation of the deceleration control when the crossing target is moving before passing beyond the intersecting region, and the continuation of the deceleration control is not required.

In one aspect of the vehicle control device according to the at least one embodiment of the present disclosure, the avoidance condition is a condition satisfied when the own vehicle passage predicted time is shorter than the crossing target reaching predicted time. With this configuration, the avoidance condition is satisfied when it is predicted that the own vehicle first passes beyond the intersecting region, and the crossing target then reaches the intersecting region. Thus, even when the deceleration control is finished when the avoidance condition is satisfied, the collision between the own vehicle and the crossing target in the intersecting region is avoided.

In another aspect of the vehicle control device according to the at least one embodiment of the present disclosure, the own vehicle passage predicted time is a predicted time taken by the own vehicle to pass beyond the intersecting region from a current position when it is assumed that the own vehicle maintains a current speed, the crossing target reaching predicted time is a predicted time taken by the crossing target to reach the intersecting region from a current position when it is assumed that the crossing target executes predetermined acceleration from a current speed, and the avoidance condition is a condition satisfied when the own vehicle passage predicted time is shorter than the crossing target reaching predicted time. With this configuration, when it is predicted that the own vehicle first passes beyond the intersecting region before the crossing target accelerates and reaches the intersecting region, the avoidance condition is satisfied. Thus, the deceleration control is finished. Therefore, even when the crossing target accelerates after the deceleration control is finished when the avoidance condition is satisfied, the collision between the own vehicle and the crossing target in the intersecting region can be avoided.

In yet another aspect of the vehicle control device according to the at least one embodiment of the present disclosure, the crossing target reaching predicted time is a predicted time taken by the crossing target to reach the intersecting region from the current position when it is assumed that the crossing target executes acceleration at a predetermined acceleration and a predetermined acceleration gradient from the current speed. With this configuration, when it is predicted that the own vehicle first passes beyond the intersecting region before the crossing target accelerates at the predetermined acceleration and acceleration gradient and reaches the intersecting region, the avoidance condition is satisfied. Thus, the deceleration control is finished. Therefore, even when the crossing target accelerates at the predetermined acceleration and acceleration gradient after the deceleration control is finished when the avoidance condition is satisfied, the collision between the own vehicle and the crossing target in the intersecting region can be avoided.

In still yet another aspect of the vehicle control device according to the at least one embodiment of the present disclosure, the own vehicle passage predicted time is a predicted time taken by the own vehicle to pass beyond the intersecting region from a current position when it is assumed that the own vehicle maintains a current speed, and the crossing target reaching predicted time is a predicted time taken by the crossing target to reach the intersecting region from a current position when it is assumed that the crossing target maintains a current speed. When the probability at which the crossing target accelerates is low, it is not required to calculate the crossing target reaching predicted time while additionally considering the predetermined acceleration condition. Thus, in such a case, it is possible to calculate the crossing target reaching predicted time while assuming that the crossing target maintains the current speed.

In still yet another aspect of the vehicle control device according to the at least one embodiment of the present disclosure, the predetermined control finish condition includes an own vehicle stop condition that is satisfied when the own vehicle (100) is stopped. When the own vehicle stops, the deceleration control is completed. Thus, the control unit determines that the control finish condition is satisfied when the own vehicle stop condition is satisfied during the execution of the deceleration control, and hence can finish the deceleration control.

In still yet another aspect of the vehicle control device according to the at least one embodiment of the present disclosure, the predetermined control finish condition includes a crossing target passage condition that is satisfied when the crossing target has passed beyond the intersecting region. In the case where the crossing target has already passed beyond the intersecting region during the deceleration control, the collision between the own vehicle and the crossing target in the intersecting region does not occur. Thus, the control unit determines that the control finish condition is satisfied when the crossing target passage condition is satisfied during the execution of the deceleration control, and hence can finish the deceleration control.

In still yet another aspect of the vehicle control device according to the at least one embodiment of the present disclosure, the predetermined control finish condition includes a crossing target stop condition that is satisfied when the crossing target stops before reaching the intersecting region. When the crossing target is stopped before the crossing target reaches the intersecting region, the crossing target is highly probably waiting for the passage of the own vehicle at a position before reaching the intersecting region so that the own vehicle first passes beyond the intersecting region. In this case, the collision between the own vehicle and the crossing target in the intersecting region does not occur. Thus, the control unit determines that the control finish condition is satisfied when the crossing target stop condition is satisfied during the execution of the deceleration control, and hence can finish the deceleration control.

BRIEF DESCRIPTION OF THE DRAWINGS

FIG. 1 is a diagram for illustrating a schematic configuration of a vehicle control device according to at least one embodiment of the present disclosure.

FIG. 2 is a view for illustrating positions at which a front radar sensor, a right front lateral radar sensor, and a left front lateral radar sensor are mounted to an own vehicle.

FIG. 3 is a view for illustrating a position at which a front camera sensor is mounted to the own vehicle.

FIG. 4 is a view for illustrating a predicted travel region of the own vehicle.

FIG. 5 is a view for illustrating the predicted travel region of the own vehicle and a predicted movement region of a crossing target expressed on a two-dimensional coordinate plane.

FIG. 6 is a view for illustrating a state in which a crossing target passage condition is satisfied.

FIG. 7 is a view for illustrating a state in which a crossing target stop condition is satisfied.

FIG. 8 is a view for illustrating an example of an own vehicle predicted position and a crossing target predicted position calculated by collision avoidance determination processing.

FIG. 9 is a view for illustrating another example of the own vehicle predicted position and the crossing target predicted position calculated by the collision avoidance determination processing.

FIG. 10 is a view for illustrating still another example of the own vehicle predicted position and the crossing target predicted position calculated by the collision avoidance determination processing.

FIG. 11 is a view for illustrating a positional relationship between the own vehicle and the crossing target at a certain time during execution of automatic brake control.

FIG. 12A is a flowchart for illustrating an example of an automatic brake control program executed by a CPU of a vehicle control ECU to execute the automatic brake control.

FIG. 12B is a flowchart for illustrating the example of the automatic brake control program executed by the CPU of the vehicle control ECU to execute the automatic brake control.

FIG. 13 is a flowchart for illustrating an example of a control finish condition determination program executed by the CPU of the vehicle control ECU to set a control finish flag F.

FIG. 14 is a flowchart for illustrating an example of an own vehicle stop condition determination program executed by the CPU of the vehicle control ECU to determine whether or not an own vehicle stop condition is satisfied.

FIG. 15 is a flowchart for illustrating an example of a crossing target passage condition determination program executed by the CPU of the vehicle control ECU to determine whether or not a crossing target passage condition is satisfied.

FIG. 16 is a flowchart for illustrating an example of a crossing target stop condition determination program executed by the CPU of the vehicle control ECU to determine whether or not a crossing target stop condition is satisfied.

FIG. 17 is a flowchart for illustrating an example of an avoidance condition determination program executed by the CPU of the vehicle control ECU to determine whether or not an avoidance condition is satisfied.

FIG. 18 is a view for illustrating an example in which the predicted travel region of the own vehicle is in a curved shape and the predicted movement region of the crossing target is in a straight-line shape.

DESCRIPTION OF THE EMBODIMENTS

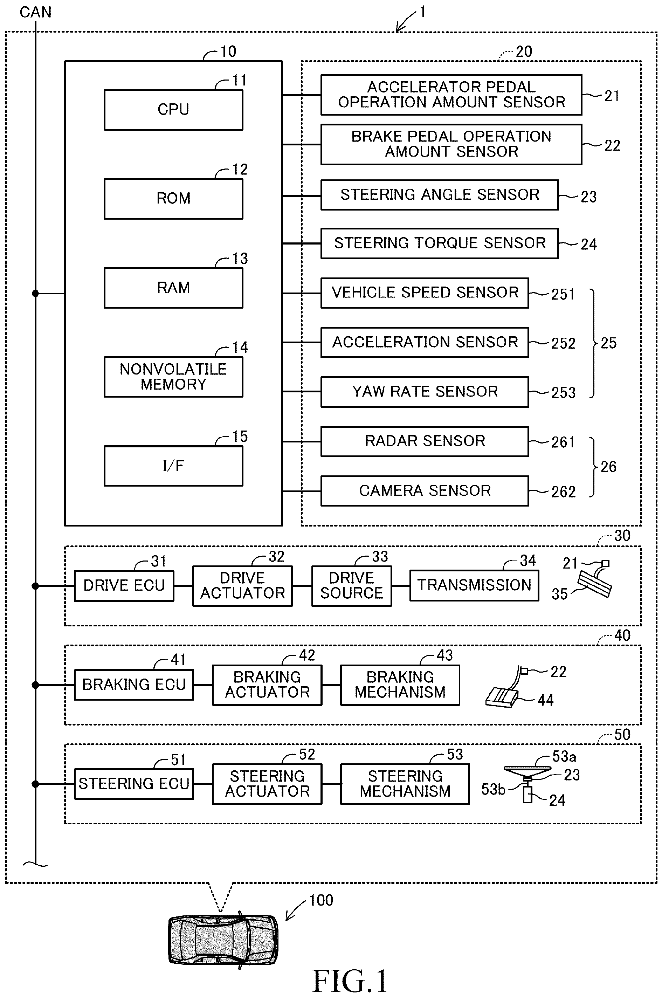

A vehicle control device according to at least one embodiment of the present disclosure is mounted to a vehicle. The vehicle to which the vehicle control device according to the at least one embodiment of the present disclosure is mounted is hereinafter referred to as "own vehicle 100". Thus, as illustrated in FIG. 1, a vehicle control device 1 according to the at least one embodiment is mounted to the own vehicle 100.

The vehicle control device 1 includes a vehicle control ECU 10, an in-vehicle sensor 20, a drive device 30, a braking device 40, and a steering device 50.

The vehicle control ECU 10 is a control unit including a microcomputer as a main component. The vehicle control ECU 10 includes a CPU 11, a ROM 12, a RAM 13, a nonvolatile memory 14, an interface 15, and the like. The CPU 11 is a processor which executes instructions (programs and routines) stored in the ROM 12, to thereby achieve various functions. "ECU" is an abbreviation for "electronic control unit."

The drive device 30 generates a driving force, and applies this driving force to driving wheels of the own vehicle 100. The drive device 30 includes a drive ECU 31, a drive actuator 32, a drive source 33, a transmission 34, and a driving force transmission mechanism (not shown) which transmits the driving force to the driving wheels. The drive ECU 31 is electrically connected to the drive actuator 32 so that an operation of the drive actuator 32 can be controlled. The drive actuator 32 is configured to be able to adjust the driving force of the drive source 33 by being activated.

The drive ECU 31 controls an operation of the drive actuator 32, to thereby control a driving force generated by the drive source 33. The driving force generated by the drive source 33 is transmitted to the driving wheels of the own vehicle 100 via the transmission 34 and the driving force transmission mechanism. Thus, the drive ECU 31 can control the driving force of the own vehicle 100 by controlling the drive actuator 32. Moreover, the drive actuator 32 is also activated through an operation of an accelerator pedal 35 provided to the own vehicle 100. Thus, the own vehicle 100 can generate a driving force corresponding to an operation amount of the accelerator pedal 35.

When the drive source 33 is an internal combustion engine, the drive ECU 31 controls a driving force generated by the internal combustion engine. Moreover, when the own vehicle 100 is a hybrid electric vehicle (HEV), the drive ECU 31 controls a driving force generated by any one of or both of an internal combustion engine and an electric motor serving as the drive source 33. When the own vehicle 100 is a battery electric vehicle (BEV), the drive ECU 31 controls a driving force generated by an electric motor serving as the drive source 33.

The braking device 40 applies a braking force to wheels of the own vehicle 100. The braking device 40 includes a braking ECU 41, a braking actuator 42, and a braking mechanism 43. The braking ECU 41 is electrically connected to the braking actuator 42 so that an operation of the braking actuator 42 can be controlled. The braking actuator 42 includes a publicly-known hydraulic circuit, and includes a reservoir (not shown), an oil pump (not shown), various valve devices (not shown), and the like. The braking mechanism 43 includes brake discs, calipers, pistons, and brake pads, and the brake pads are pressed against each brake disc by a hydraulic pressure (that is, a braking pressure) supplied from the braking actuator 42, to thereby generate a friction braking force. The own vehicle 100 is braked by the friction braking force generated by the braking mechanism 43.

The braking actuator 42 adjusts the hydraulic pressure (braking pressure) supplied to the braking mechanism 43 in accordance with an instruction from the braking ECU 41. The friction braking force generated on the wheel changes in accordance with the braking pressure. Thus, the braking ECU 41 can control the braking force of the own vehicle 100 by controlling the braking actuator 42. Moreover, the braking actuator 42 is also activated through an operation on a brake pedal 44 provided to the own vehicle 100. Thus, the own vehicle 100 can generate a braking force corresponding to an operation amount of the brake pedal 44.

The steering device 50 is a device which serves to steer the own vehicle 100. The steering device 50 includes a steering ECU 51, a steering actuator 52, and a steering mechanism 53. The steering ECU 51 is electrically connected to the steering actuator 52 so that an operation of the steering actuator 52 can be controlled. The steering mechanism 53 includes a steering wheel 53a, a steering shaft 53b, a steering gear box (not shown), a tie rod (not shown), and the like. The steering mechanism 53 is configured to achieve steering of steered wheels through a rotation operation of the steering wheel 53a. The steering actuator 52 is, for example, an electric motor, and is connected to the steering mechanism 53 such that motive power to steer the steered wheels can be applied to the steering mechanism 53. This steering actuator 52 may also be configured to generate such a steering assist force as assisting in the operation of a driver on the steering wheel 53a. The steering ECU 51 controls an operation of the steering actuator 52, to thereby control the operation of the steering mechanism 53. Thus, the steering ECU 51 can control steering angles of the steered wheels of the own vehicle 100 by controlling the steering actuator 52.

The in-vehicle sensor 20 includes an accelerator pedal operation amount sensor 21, a brake pedal operation amount sensor 22, a steering angle sensor 23, a steering torque sensor 24, a vehicle motion amount detection sensor 25, and a peripheral information detection sensor 26.

The accelerator pedal operation amount sensor 21 detects an operation amount of the accelerator pedal 35. The accelerator pedal operation amount sensor 21 is electrically connected to the vehicle control ECU 10. The accelerator pedal operation amount sensor 21 transmits information indicating the detected operation amount of the accelerator pedal 35 to the vehicle control ECU 10. The vehicle control ECU 10 acquires the operation amount of the accelerator pedal 35 based on the information received from the accelerator pedal operation amount sensor 21.

The brake pedal operation amount sensor 22 detects an operation amount of the brake pedal 44. The brake pedal operation amount sensor 22 is electrically connected to the vehicle control ECU 10. The brake pedal operation amount sensor 22 transmits information indicating the detected operation amount of the brake pedal 44 to the vehicle control ECU 10. The vehicle control ECU 10 acquires the operation amount of the brake pedal 44 based on the information received from the brake pedal operation amount sensor 22.

The steering angle sensor 23 detects a rotation angle of the steering shaft 53b with respect to a neutral position. The steering angle sensor 23 is electrically connected to the vehicle control ECU 10. The steering angle sensor 23 transmits information indicating the detected rotation angle of the steering shaft 53b to the vehicle control ECU 10. The vehicle control ECU 10 acquires the rotation angle of the steering shaft 53b as a steering angle $\theta_e$ based on the information received from the steering angle sensor 23.

The steering torque sensor 24 detects a torque input by the driver to the steering shaft 53b via the steering wheel 53a. The steering torque sensor 24 is electrically connected to the vehicle control ECU 10. The steering torque sensor 24 transmits information indicating the detected torque to the vehicle control ECU 10. The vehicle control ECU 10 acquires, as a steering torque, the torque input by the driver to the steering shaft 53b via the steering wheel 53a based on the information received from the steering torque sensor 24.

The vehicle motion amount detection sensor 25 detects a motion amount of the own vehicle 100. The vehicle motion amount detection sensor 25 includes a vehicle speed sensor 251, an acceleration sensor 252, and a yaw rate sensor 253.

The vehicle speed sensor 251 detects a travel speed of the own vehicle 100, that is, an own vehicle speed $V_e$

being a speed toward a traveling direction of the own vehicle 100. The vehicle speed sensor 251 is, for example, a vehicle wheel speed sensor which detects a rotation speed of the wheel of the own vehicle 100. The vehicle speed sensor 251 is electrically connected to the vehicle control ECU 10. The vehicle speed sensor 251 transmits information indicating the detected own vehicle speed $V_e$ to the vehicle control ECU 10. The vehicle control ECU 10 acquires the own vehicle speed $V_e$ based on the information received from the vehicle speed sensor 251.

The acceleration sensor 252 detects an acceleration (longitudinal acceleration) acting in the traveling direction (front-and-rear direction) of the own vehicle 100. The acceleration sensor 252 is electrically connected to the vehicle control ECU 10. The acceleration sensor 252 transmits information indicating the detected acceleration to the vehicle control ECU 10. The vehicle control ECU 10 acquires an acceleration $\alpha_e$ acting in the traveling direction (front-and-rear direction) of the own vehicle 100 based on the information received from the acceleration sensor 252. The acceleration sensor 252 detects, as a positive acceleration, an acceleration at the time of forward acceleration of the own vehicle 100, and detects, as a negative acceleration, an acceleration at the time of backward acceleration of the own vehicle 100, that is, a deceleration. The term "acceleration" as used herein refers to the longitudinal acceleration unless otherwise specified.

The yaw rate sensor 253 detects a yaw rate of the own vehicle 100. The yaw rate sensor 253 is electrically connected to the vehicle control ECU 10. The yaw rate sensor 253 transmits information indicating the detected yaw rate to the vehicle control ECU 10. The vehicle control ECU 10 acquires a yaw rate $Y_e$ of the own vehicle 100 based on the information received from the yaw rate sensor 253.

The peripheral information detection sensor 26 detects information on a peripheral environment of the own vehicle 100. In the at least one embodiment, the peripheral information detection sensor 26 includes a radio wave sensor and an image sensor. The radio wave sensor is a radar sensor 261 which uses a radar wave as a radio wave to detect the peripheral information in the at least one embodiment. The image sensor is a camera sensor 262 in the at least one embodiment. The peripheral information detection sensor 26 may include a sound wave sensor such as an ultrasonic sensor (clearance sonar) or an optical sensor such as a LiDAR, or may include a time-of-flight (ToF) sensor.

The radar sensor 261 is electrically connected to the vehicle control ECU 10. The radar sensor 261 transmits a radar wave (for example, a radar wave from a millimeter wave radar) and receives a radar wave (reflected wave) reflected on an object. The radar sensor 261 transmits target detection information acquired from the transmitted radar wave and the received radar wave to the vehicle control ECU 10. The radar sensor 261 detects targets existing in the periphery of the own vehicle 100 based on, for example, relationship between the transmitted radar wave and the received radar wave, and transmits, as the target detection information, information on the detected targets to the vehicle control ECU 10. The vehicle control ECU 10 acquires information on the targets existing in the periphery of the own vehicle 100 based on the target detection information received from the radar sensor 261.

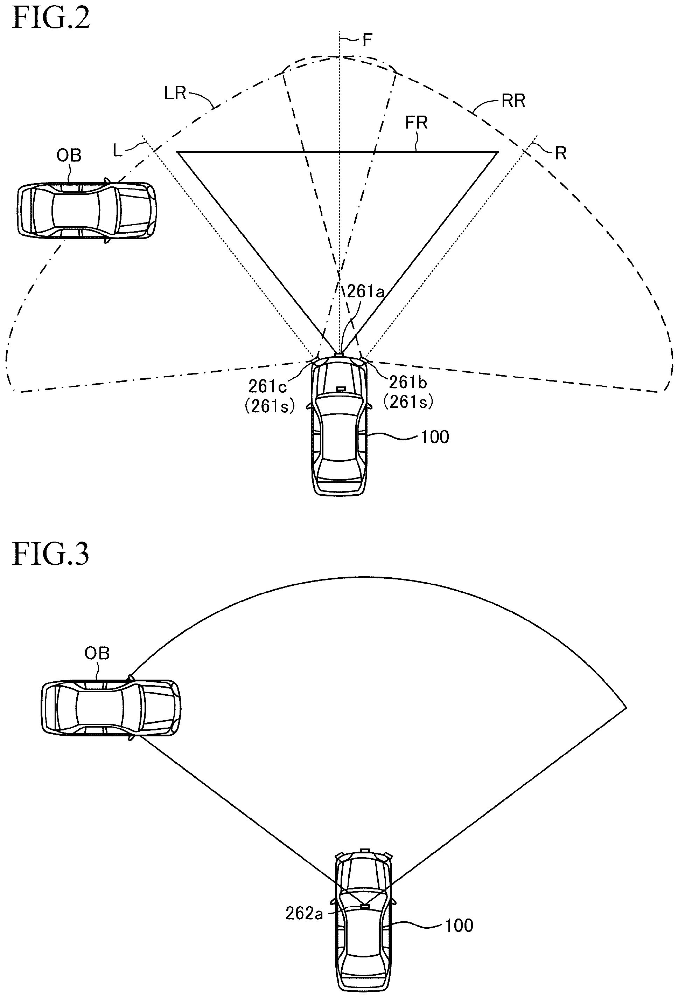

The radar sensor 261 includes a front radar sensor 261a, a right front lateral radar sensor 261b, and a left front lateral radar sensor 261c. FIG. 2 shows positions at which the front radar sensor 261a, the right front lateral radar sensor 261b, and the left front lateral radar sensor 261c are mounted to the own vehicle 100. As illustrated in FIG. 2, the front radar sensor 261a is mounted to a substantially center of a front end portion (for example, a front bumper) of the own vehicle 100. The right front lateral radar sensor 261b is mounted to a right front end portion of the own vehicle 100. The left front lateral radar sensor 261c is mounted to a left front end portion of the own vehicle 100.

The front radar sensor 261a transmits a radar wave to a region (front region) having an extension over a predetermined angle having, as a center, an axis F directed from the mounting position thereof toward the front direction of the own vehicle 100, and receives a reflected wave from the front region. In FIG. 2, a region (front region) FR in which the radar wave is transmitted by the front radar sensor 261a is schematically indicated as a region surrounded by the solid line. The right front lateral radar sensor 261b transmits a radar wave to a region (right front lateral region) having an extension over a predetermined angle having, as a center, an axis R directed from the mounting position thereof toward a right front lateral (right diagonally front) direction of the own vehicle 100, and receives a reflected wave from the right front lateral region. In FIG. 2, a region (right front lateral region) RR in which the radar wave is transmitted by the right front lateral radar sensor 261b is schematically indicated as a region surrounded by the broken line. The left front lateral radar sensor 261c transmits a radar wave to a region (left front lateral region) having an extension over a predetermined angle having, as a center, an axis L directed from the mounting position thereof toward a left front lateral (left diagonally front) direction of the own vehicle 100, and receives a reflected wave from the left front lateral region. In FIG. 2, a region (left front lateral region) LR in which the radar wave is transmitted by the left front lateral radar sensor 261c is schematically indicated by a region surrounded by the one-dot chain line. As illustrated in FIG. 2, the regions in which the radar wave is transmitted by the respective radar sensors, that is, the front region FR, the right front lateral region RR, and the left front lateral region LR, may partially overlap with one another.

The front radar sensor 261a detects a target existing in the front region FR based on the relationship between the transmitted wave and the received wave, and transmits information on the detected target to the vehicle control ECU 10. The right front lateral radar sensor 261b detects a target existing in the right front lateral region RR based on the relationship between the transmitted wave and the received wave, and transmits information on the detected target to the vehicle control ECU 10. The left front lateral radar sensor 261c detects a target existing in the left front lateral region LR based on the relationship between the transmitted wave and the received wave, and transmits information on the detected target to the vehicle control ECU 10. In the following description, the right front lateral and left front lateral are sometimes collectively referred to as "front lateral". Moreover, the right front lateral radar sensor 261b and the left front lateral radar sensor 261c are sometimes collectively referred to as "front lateral radar sensors 261s".

The vehicle control ECU 10 acquires information on a target existing in the front region and the front lateral regions of the own vehicle 100 based on the information received from the front radar sensor 261a and the front lateral radar sensors 261s. For example, when a target OB exists in the left front lateral region of the own vehicle 100 as illustrated in FIG. 2, the vehicle control ECU 10 acquires a type of the target OB existing in the left front lateral region of the own vehicle 100, an orientation of the target OB with respect to the own vehicle 100, a relative distance $L_r$ and a relative speed $V_r$ between the own vehicle 100 and the target OB, and the like based on the information received from the left front lateral radar sensor 261c.

The camera sensor 262 is electrically connected to the vehicle control ECU 10. The camera sensor 262 includes a camera device and an image analysis device. The camera device is a digital camera which incorporates an image pickup element formed of, for example, a charge coupled device (CCD) or a CMOS image sensor (CIS). The camera device captures an image of the peripheral region of the own vehicle 100 at a predetermined frame rate, to thereby acquire image data. The camera device transmits each piece of image data acquired at the predetermined frame rate to the image analysis device. The image analysis device analyzes each acquired piece of image data, to thereby acquire information on targets and markings existing in the periphery of the own vehicle 100 from images thereof, and transmits this information to the vehicle control ECU 10. The vehicle control ECU 10 acquires information on the targets and the markings existing in the periphery of the own vehicle 100 based on the information received from the image analysis device.

The camera sensor 262 includes a front camera sensor 262a. FIG. 3 shows a position at which the front camera sensor 262a is mounted to the own vehicle 100. As illustrated in FIG. 3, the front camera sensor 262a is installed at, for example, a center of an upper portion of a front windshield of the own vehicle 100. An image pickup lens provided to a camera device of the front camera sensor 262a is a wide angle lens, and hence the front camera sensor 262a can capture an image of a relatively wide region, for example, the front region and the front lateral regions in front of the own vehicle 100. The front camera sensor 262a analyzes the captured image data, acquires the information on the targets and the markings existing in the front region or the front lateral regions of the own vehicle 100 from the image data, and transmits this information to the vehicle control ECU 10. The vehicle control ECU 10 acquires the information on the targets and the markings existing in the front region or the front lateral regions of the own vehicle 100 based on the information received from the front camera sensor 262a. For example, the vehicle control ECU 10 acquires a lane in which the own vehicle 100 is traveling, types of the markings or the targets existing in the front region or the front lateral regions of the own vehicle 100, and the like based on the information received from the front camera sensor 262a.

The vehicle control ECU 10 may unify the information received from the front radar sensor 261a and the front lateral radar sensors 261s and the information received from the front camera sensor 262a, to thereby acquire information on the targets existing in the front region or the front lateral regions of the own vehicle 100.

The radar sensor 261 may include a rear radar sensor which transmits a radar wave toward a rear direction of the own vehicle 100, a rear lateral radar sensor which transmits a radar wave toward a rear lateral direction of the own vehicle 100, a lateral radar sensor which transmits a radar wave toward a lateral direction of the own vehicle 100, and the like. The camera sensor 262 may include a rear camera sensor which captures an image of a rear region of the own vehicle, a lateral camera sensor which captures an image of a lateral region of the own vehicle 100, and the like.

As illustrated in FIG. 1, the vehicle control ECU 10 is connected, via a controller area network (CAN), to other ECUs including the drive ECU 31, the braking ECU 41, and the steering ECU 51 such that information can mutually be transmitted and received. Thus, each ECU can acquire, via the CAN, information acquired by the other ECUs.

Moreover, the vehicle control device 1 is configured to be able to execute automatic driving control for the own vehicle 100. For example, the vehicle control ECU 10 transmits, via the CAN, a control signal to each of the drive ECU 31, the braking ECU 41, and the steering ECU 51 based on the information acquired from the in-vehicle sensor 20. The drive ECU 31 controls the drive actuator 32 based on the control signal received from the vehicle control ECU 10. The braking ECU 41 controls the braking actuator 42 based on the control signal received from the vehicle control ECU 10. The steering ECU 51 controls the steering actuator 52 based on the control signal received from the vehicle control ECU 10. With this configuration, the automatic driving of the own vehicle 100 is achieved.

(Overview of Activation of Automatic Brake Control)

While the own vehicle 100 is executing the automatic driving or the driver is manually driving the own vehicle 100, the vehicle control ECU 10 starts automatic brake control when the vehicle control ECU 10 determines that a probability of collision between the own vehicle 100 and a target (crossing target) predicted to cross a region (predicted travel region) in which the own vehicle 100 is predicted to travel is high.

The automatic brake control is deceleration control of controlling the braking device 40 such that the own vehicle 100 decelerates. Moreover, the vehicle control ECU 10 is configured to finish the automatic brake control when a predetermined control finish condition is satisfied during the execution of the automatic brake control. An overview of activation of this automatic brake control is now described.

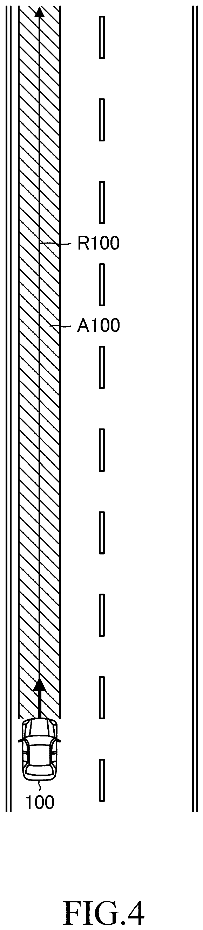

The vehicle control ECU 10 calculates the predicted travel region of the own vehicle 100 during the travel of the own vehicle 100. FIG. 4 shows the predicted travel region of the own vehicle 100. The predicted travel region of the own vehicle 100 is a region in which the own vehicle 100 is predicted to travel subsequently to the current time. As illustrated in FIG. 4, a predicted travel region A100 is a region having a center at a predicted travel path R100 of the own vehicle 100 and having a width equivalent to a vehicle width of the own vehicle 100. The predicted travel path R100 is a travel path on which a center portion of the own vehicle 100 in the vehicle width direction is predicted to travel when the own vehicle 100 travels while maintaining a steering angle $\theta_e$ or yaw rate $Y_e$ at the current time. Thus, the predicted travel path R100 illustrated in FIG. 4 is in a straight-line shape, but may be in a curved shape depending on a situation.

The vehicle control ECU 10 calculates the predicted travel path R100 which is the path on which the center portion of the own vehicle 100 in the width direction is predicted to travel based on the own vehicle speed $V_e$, the acceleration $\alpha_e$, and the steering angle $\theta_e$ (or the yaw rate $Y_e$). Moreover, the vehicle control ECU 10 calculates the predicted travel region A100 based on the calculated predicted travel path R100 and the vehicle width of the own vehicle 100.

Moreover, the vehicle control ECU 10 determines whether or not a moving target exists in the front region or the front lateral regions of the own vehicle 100 based on the information acquired from the front radar sensor 261a and the front lateral radar sensors 261s, and the front camera sensor 262a during the travel of the own vehicle 100. When the vehicle control ECU 10 determines that a moving target exists in the front region or the front lateral regions of the own vehicle 100, the vehicle control ECU 10 calculates a predicted movement region of this moving target. The predicted movement region of the moving target is a region in which the moving target travels along a path on which the moving target is predicted to travel. In order to calculate the predicted movement region of the moving target, the vehicle control ECU 10 calculates a relative distance and a relative speed between the moving target and the own vehicle 100 and an orientation in which the moving target exists based on the information acquired from the front radar sensor 261a and the front lateral radar sensors 261s. After that, the vehicle control ECU 10 can calculate the predicted movement region of the moving target based on the calculated relative distance, relative speed, and orientation, and the like.

The predicted travel region A100 of the own vehicle 100 and the predicted movement region of the moving target can be expressed on a predetermined two-dimensional coordinate plane. For example, the predicted travel region A100 of the own vehicle 100 and the predicted movement region of the moving target can be expressed on an X-Y coordinate plane having an origin at a predetermined position of the own vehicle 100 (for example, the center portion of the front end of the own vehicle 100), an X axis which passes through the origin and extends along the front-and-rear direction of the own vehicle 100, and a Y axis which passes through the origin and extends along the width direction of the own vehicle 100.

The vehicle control ECU 10 determines whether or not the predicted travel region A100 of the own vehicle 100 and the predicted movement region of the moving target expressed on this X-Y coordinate plane intersect with each other. When the vehicle control ECU 10 determines that the predicted travel region A100 of the own vehicle 100 and the predicted movement region of the moving target intersect with each other, the vehicle control ECU 10 sets this moving target as a crossing target 200 which is predicted to cross the predicted travel region A100 of the own vehicle 100.

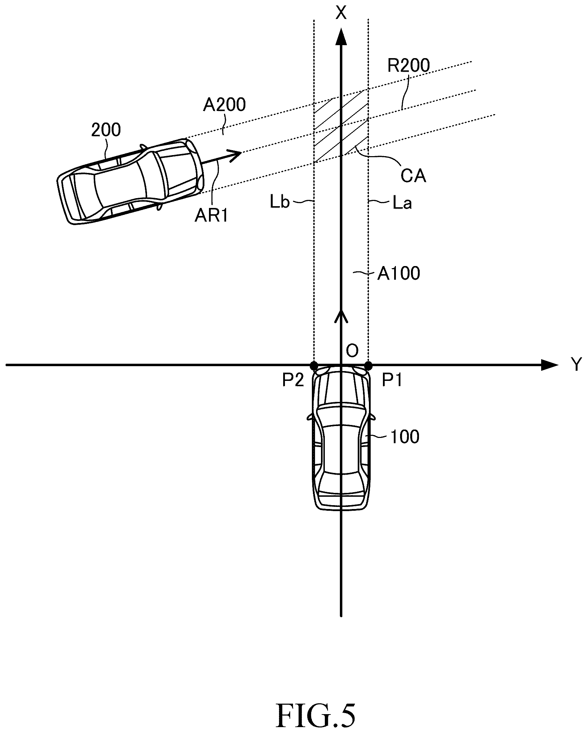

FIG. 5 shows the predicted travel region A100 of the own vehicle 100 and a predicted movement region A200 of the crossing target 200 expressed on the X-Y coordinate plane. The origin O of the X-Y coordinate plane of FIG. 5 is the center portion of the front end of the own vehicle 100, the X axis passes through the origin O and extends in the front-and-rear direction of the own vehicle 100, and the Y axis passes through the origin O and extends in the width direction of the own vehicle 100. A region on an upper right side of the origin O is a region in which X>0 and Y>0. A region on an upper left side of the origin O is a region in which X>0 and Y<0. A region on a lower right side of the origin O is a region in which X<0 and Y>0. A region on a lower left side of the origin O is a region in which X<0 and Y<0.

On this X-Y coordinate plane, the own vehicle 100 travels along the X axis. Thus, the predicted travel region A100 of the own vehicle 100 is defined as a region surrounded by a straight line La directed upward in parallel with the X axis from a point P1 moved from the origin O toward the Y axis direction by +W/2 and a straight line Lb directed upward in parallel with the X axis from a point P2 moved from the origin O toward the Y axis direction by -W/2. W is the vehicle width of the own vehicle 100.

The crossing target 200 is positioned at a left upper point of the origin O in FIG. 5. The crossing target 200 is moving toward the predicted travel region A100 of the own vehicle 100 as indicated by an arrow AR1 of FIG. 5. The arrow AR1 is a speed vector of the crossing target 200. The speed vector AR1 of the crossing target 200 can be obtained from the relative distance and the relative speed between the crossing target 200 and the own vehicle 100 and the orientation in which the crossing target 200 exists. The movement direction of the crossing target 200 matches the direction of the speed vector AR1 of the crossing target 200. Thus, the predicted movement region A200 of the crossing target 200 can be calculated based on the position of the crossing target 200, the speed vector AR1 of the crossing target 200, and an estimated value of the width of the crossing target 200 in a direction perpendicular to the speed vector AR1. The position of the crossing target 200 can be calculated based on the relative distance between the own vehicle 100 and the crossing target 200 and the orientation in which the crossing target 200 exists.

As illustrated in FIG. 5, the predicted travel region A100 of the own vehicle 100 and the predicted movement region A200 of the crossing target 200 intersect with each other in an intersecting region CA. The intersecting region CA can be defined as a region on the X-Y coordinate plane of FIG. 5.

The vehicle control ECU 10 determines, when the crossing target 200 is set, whether or not the own vehicle 100 possibly collides with the crossing target 200 in the intersecting region CA. In this case, for example, the vehicle control ECU 10 calculates positions at which the own vehicle 100 and the crossing target 200 probably exist each time a minute time elapses from the current time when assuming that the own vehicle 100 and the crossing target 200 maintain current speeds and accelerations. The vehicle control ECU 10 compares a relationship between the calculated position at which the own vehicle 100 probably exists and the calculated position at which the crossing target 200 probably exists each time the minute time elapses, to thereby determine whether or not the prediction that the own vehicle 100 and the crossing target 200 collide with each other is correct.

When the vehicle control ECU 10 determines that the prediction that the own vehicle 100 and the crossing target 200 collide with each other is correct, the vehicle control ECU 10 determines whether or not a time TTC until the own vehicle 100 and the crossing target 200 collide with each other is equal to or shorter than a predetermined threshold time TTCth. After that, when the time TTC is equal to or shorter than the threshold time TTCth, the vehicle control ECU 10 determines that the probability of collision between the own vehicle 100 and the crossing target 200 is high.

When the vehicle control ECU 10 determines that the probability of collision between the own vehicle 100 and the crossing target 200 is high, the vehicle control ECU 10 starts the automatic brake control.

When the vehicle control ECU 10 starts the automatic brake control, the vehicle control ECU 10 outputs a command signal to the braking ECU 41 such that the own vehicle 100 is forcibly braked. As a result, the braking actuator 42 is activated, to thereby forcibly brake the own vehicle 100. In this case, a certain braking force may be applied to the own vehicle 100, or a braking force stronger than a current braking force may be applied to the own vehicle 100 when the vehicle control ECU 10 determines that the collision cannot be avoided at the current braking force.

The vehicle control ECU 10 determines whether or not the predetermined control finish condition is satisfied during the execution of the automatic brake control. The vehicle control ECU 10 is configured to finish the automatic brake control when the vehicle control ECU 10 determines that the control finish condition is satisfied.

In the at least one embodiment, the vehicle control ECU 10 first determines whether or not the position of the crossing target 200 exists in the intersecting region CA in order to determine whether or not the control finish condition is satisfied during the execution of the automatic brake control. When the position of the crossing target 200 exists in the intersecting region CA, there is a fear that the own vehicle and the crossing target 200 may collide with each other in the intersecting region CA if the automatic brake control is finished. Thus, when the position of the crossing target 200 exists in the intersecting region CA, the vehicle control ECU 10 determines that the control finish condition is not satisfied. When the position of the crossing target 200 does not exist in the intersecting region CA, the vehicle control ECU 10 then determines whether or not an own vehicle stop condition has been satisfied. The own vehicle stop condition is satisfied when the own vehicle 100 is stopped, and is not satisfied when the own vehicle 100 is moving. Whether or not this own vehicle stop condition is satisfied can be determined based on the own vehicle speed $V_e$ acquired from the vehicle speed sensor 251. When the own vehicle stop condition is satisfied, it is considered that the automatic brake control is completed. In this case, the vehicle control ECU 10 determines that the control finish condition is satisfied, and hence finishes the automatic brake control.

When the own vehicle stop condition is not satisfied, that is, when the own vehicle 100 is moving, the vehicle control ECU 10 then determines whether or not a crossing target passage condition is satisfied. The crossing target passage condition is satisfied when the crossing target 200 has passed beyond the intersecting region CA, and is not satisfied when the crossing target 200 has not passed beyond the intersecting region CA.

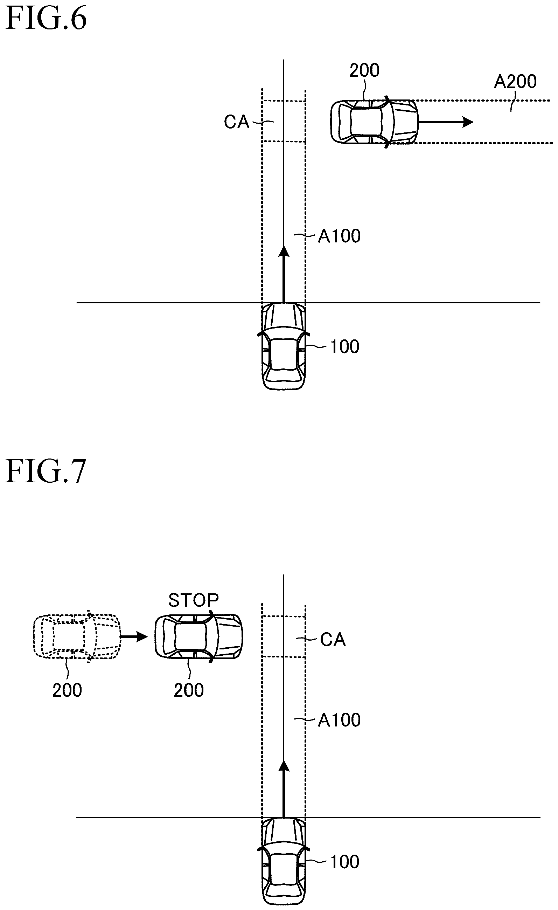

FIG. 6 shows a state in which the crossing target passage condition is satisfied. As illustrated in FIG. 6, when the crossing target 200 has already passed beyond the intersecting region CA, the own vehicle 100 which passes the intersecting region CA in the future and the crossing target 200 do not collide with each other in the intersecting region CA. Thus, when the crossing target passage condition is satisfied, the vehicle control ECU 10 determines that the control finish condition is satisfied, and hence finishes the automatic brake control. Whether or not the crossing target passage condition is satisfied can be determined based on, for example, the position and the movement direction of the crossing target 200.

When the crossing target passage condition is not satisfied, the vehicle control ECU 10 then determines whether or not a crossing target stop condition is satisfied. The crossing target stop condition is satisfied when the crossing target 200 stops before reaching the intersecting region CA, and is not satisfied otherwise.

FIG. 7 shows a state in which the crossing target stop condition is satisfied. As illustrated in FIG. 7, when the crossing target 200 is stopped before reaching the intersecting region CA, the crossing target 200 is highly probably waiting for the passage of the own vehicle 100 at a position before reaching the intersecting region CA so that the own vehicle 100 first passes beyond the intersecting region CA. In this case, the collision between the own vehicle 100 and the crossing target 200 in the intersecting region CA does not occur. Thus, when the crossing target stop condition is satisfied, the vehicle control ECU 10 determines that the control finish condition is satisfied, and hence finishes the automatic brake control. Whether or not the crossing target stop condition is satisfied can be determined based on the speed of the crossing target 200.

When the crossing target stop condition is not satisfied, it is considered that the crossing target 200 is in a state in which the crossing target 200 is at a position before reaching the intersecting region CA and the crossing target 200 is moving toward the intersecting region CA. In this case, the vehicle control ECU 10 then executes collision avoidance determination processing. The collision avoidance determination processing is processing of determining whether or not the collision between the own vehicle 100 and the crossing target 200 is avoidable through the automatic brake control which has been executed up to the current time. In this case, the vehicle control ECU 10 calculates the positions at which the own vehicle 100 and the crossing target 200 probably exist each time the minute time elapses from the current time when it is assumed that the own vehicle 100 and the crossing target 200 maintain current speeds and accelerations (decelerations). When it is predicted, as a result of the calculation, that the own vehicle 100 and the crossing target 200 collide with each other, the vehicle control ECU 10 determines that the collision between the own vehicle 100 and the crossing target 200 is unavoidable. Meanwhile, when it is predicted, as a result of the calculation, that the own vehicle 100 and the crossing target 200 do not collide with each other, the vehicle control ECU 10 determines that the collision between the own vehicle 100 and the crossing target 200 is avoidable.

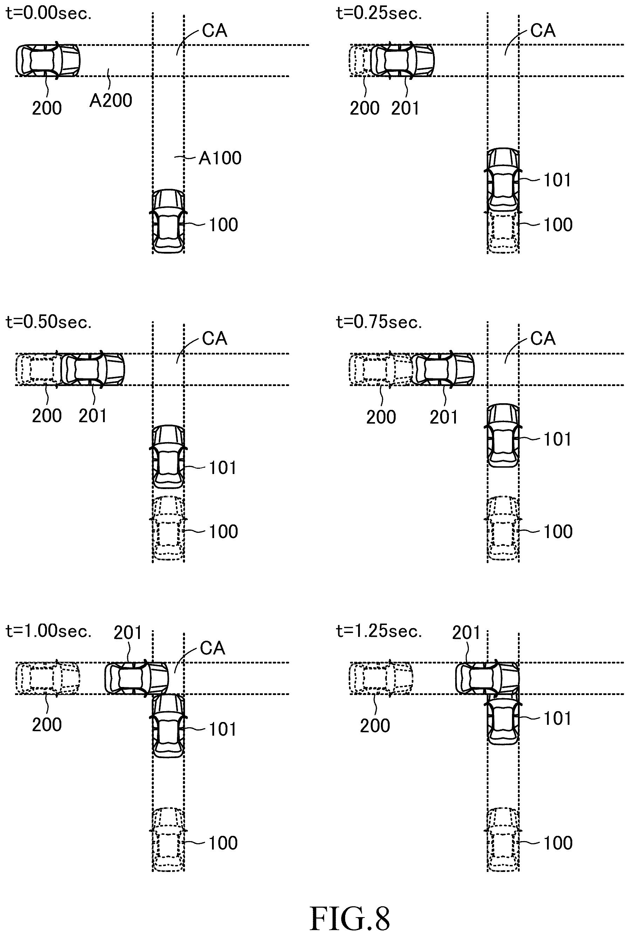

FIG. 8 shows an example of the position at which the own vehicle 100 probably exists (own vehicle predicted position) and the position at which the crossing target 200 probably exists (crossing target predicted position) calculated by the collision avoidance determination processing. In FIG. 8, there are illustrated a relationship between a position of the own vehicle 100 and a position of the crossing target 200 at the current time (t=0.00 sec.) and relationships between the own vehicle predicted positions and the crossing target predicted positions when 0.25 second elapses from the current time (t=0.25 sec.), when 0.50 second elapses from the current time (t=0.50 sec.), when 0.75 second elapses from the current time (t=0.75 sec.), when 1.00 second elapses from the current time (t=1.00 sec.), and when 1.25 seconds elapse from the current time (t=1.25 sec.). The own vehicle existing at the own vehicle predicted position is denoted by reference symbol 101, and a crossing target existing at the crossing target predicted position is denoted by reference symbol 201. In FIG. 8, a part of the own vehicle predicted positions and the crossing target predicted positions calculated by the collision avoidance determination processing are illustrated. The own vehicle predicted positions and the crossing target predicted positions are actually calculated every more minute time (for example, every 0.01 second).

Based on the example illustrated in FIG. 8, it is predicted that the own vehicle 100 and the crossing target 200 collide with each other in the intersecting region CA 1.0 second after the current time (t=1.00 sec.) when the own vehicle 100 and the crossing target 200 maintain the current speeds and accelerations. Thus, the vehicle control ECU 10 determines that the collision between the own vehicle 100 and the crossing target 200 is unavoidable. In this case, the vehicle control ECU 10 determines that the control finish condition is not satisfied. When the collision between the own vehicle 100 and the crossing target 200 is determined to be unavoidable, the collision cannot be avoided with the current braking force applied to the own vehicle 100. Thus, in this case, the vehicle control ECU 10 can control the braking device 40 such that the braking force applied to the own vehicle 100 increases.

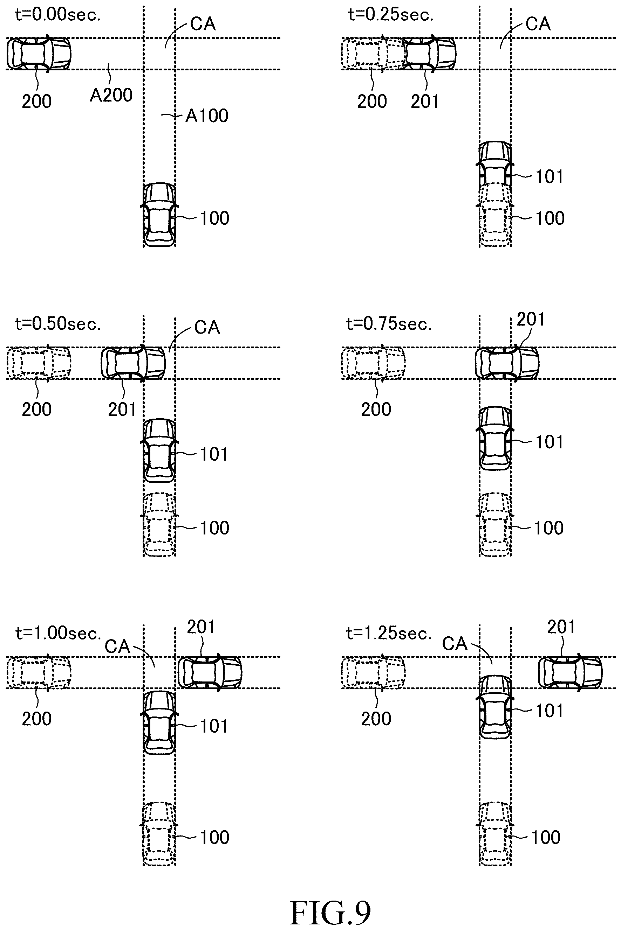

FIG. 9 shows another example of the own vehicle predicted position and the crossing target predicted position calculated by the collision avoidance determination processing. Also in FIG. 9, there are illustrated a relationship between a position of the own vehicle 100 and a position of the crossing target 200 at the current time (t=0.00 sec.) and relationships between the own vehicle predicted positions and the crossing target predicted positions when 0.25 second elapses from the current time (t=0.25 sec.), when 0.50 second elapses from the current time (t=0.50 sec.), when 0.75 second elapses from the current time (t=0.75 sec.), when 1.00 second elapses from the current time (t=1.00 sec.), and when 1.25 seconds elapse from the current time (t=1.25 sec.). In the example illustrated in FIG. 9, it is predicted that, when the own vehicle 100 and the crossing target 200 maintain the current speed and the current acceleration, the crossing target 200 (201) passes beyond the intersecting region CA 1.00 second after the current time (T=1.00 sec.), and the own vehicle 100 (101) then reaches the intersecting region CA. Thus, in this case, the vehicle control ECU 10 determines that the collision between the own vehicle 100 and the crossing target 200 is avoidable.

Incidentally, in a collision avoidance mode of FIG. 9, the collision is avoided, but it is predicted that the crossing target 200 (201) crosses immediately in front of the own vehicle 100 (101). When the automatic brake control is finished in such a situation, the driver of the own vehicle 100 has a sense of uneasiness. Thus, the vehicle control ECU 10 determines that the control finish condition is not satisfied when it is predicted that the collision is avoided by the own vehicle 100 reaching the intersecting region CA after the crossing target 200 crosses the intersecting region CA. The collision avoidance mode of FIG. 9 is hereinafter sometimes referred to as "avoidance mode 1".

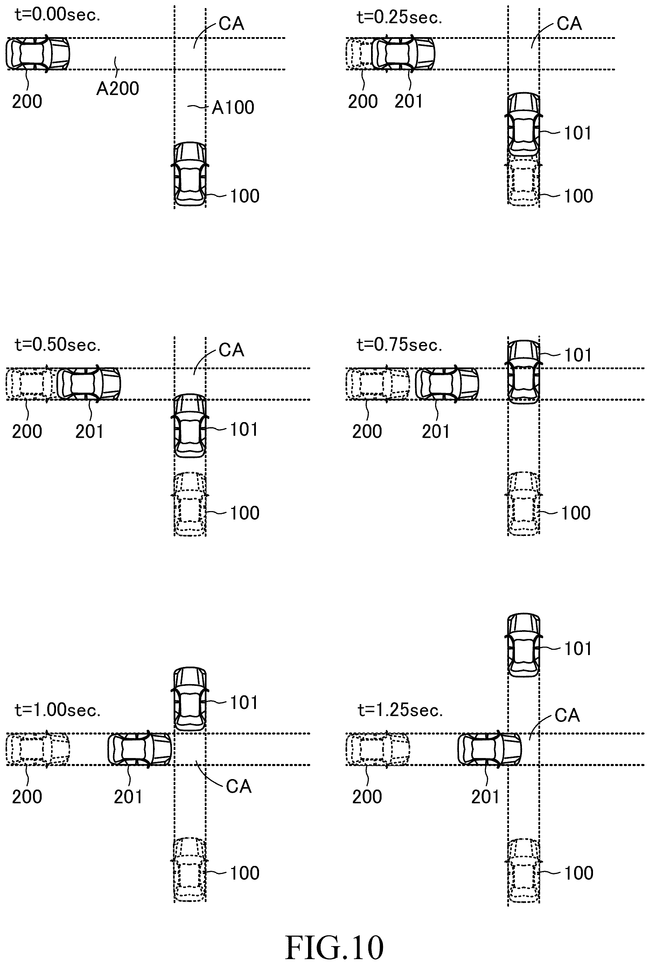

FIG. 10 shows still another example of the own vehicle predicted position and the crossing target predicted position calculated by the collision avoidance determination processing. Also in FIG. 10, there are illustrated a relationship between a position of the own vehicle 100 and a position of the crossing target 200 at the current time (t=0.00 sec.) and positional relationships between the own vehicle predicted positions and the crossing target predicted positions when 0.25 second elapses from the current time (t=0.25 sec.), when 0.50 second elapses from the current time (t=0.50 sec.), when 0.75 second elapses from the current time (t=0.75 sec.), when 1.00 second elapses from the current time (t=1.00 sec.), and when 1.25 seconds elapse from the current time (t=1.25 sec.). In the example illustrated in FIG. 10, when the own vehicle 100 and the crossing target 200 maintain the current speed and the current acceleration, the own vehicle 100 passes beyond the intersecting region CA 1.00 second after the current time (t=1.00 sec.), and the crossing target 200 then reaches the intersecting region CA. Thus, in this case, the vehicle control ECU 10 determines that the collision between the own vehicle 100 and the crossing target 200 is avoidable. The collision avoidance mode of FIG. 10, that is, the collision avoidance mode in which it is predicted that the collision is avoided by the crossing target 200 reaching the intersecting region CA after the own vehicle 100 passes beyond the intersecting region CA is hereinafter sometimes referred to as "avoidance mode 2".

A situation in which it is predicted that the collision avoidance mode is the avoidance mode 2 is possibly a situation in which the crossing target 200 is moving at a low speed while reducing the speed before entering the intersecting region CA in order to allow the own vehicle 100 to first pass beyond the intersecting region CA. In this situation, it is better to finish the automatic brake control of the own vehicle 100 so that the own vehicle 100 passes beyond the intersecting region CA earlier. Meanwhile, in a case of an unexpected behavior of the crossing target 200, for example, sudden acceleration of the crossing target 200, when the automatic brake control is finished, there is a fear that the own vehicle 100 and the crossing target 200 may collide with each other in the intersecting region CA.

However, a situation in which even when the crossing target 200 is moving while reducing the speed in order to allow the own vehicle 100 to first pass beyond the intersecting region CA, the own vehicle 100 is also decelerating through the automatic brake control is a situation in which the automatic brake control is unnecessarily continuously activated. Thus, the vehicle control ECU 10 of the vehicle control device 1 according to the at least one embodiment of the present disclosure determines, in order to suppress the unnecessary continuation of the automatic brake control while avoiding the collision, that the control finish condition is satisfied when the collision avoidance in the avoidance mode 2 of FIG. 10 is predicted and the following avoidance condition is satisfied.

The avoidance condition is a condition satisfaction or dissatisfaction of which is determined when the position of the crossing target 200 is a position before crossing the predicted travel region A100 of the own vehicle 100 (that is, the position of the crossing target 200 is a position before reaching the intersecting region CA) and the own vehicle 100 and the crossing target 200 are moving (that is, when none of the own vehicle 100 and the crossing target 200 are stopped). A situation in which the position of the crossing target 200 does not exist in the intersecting region CA, the own vehicle stop condition is not satisfied, the crossing target passage condition is not satisfied, and the crossing target stop condition is not satisfied is a situation in which the position of the crossing target 200 is a position before reaching the intersecting region CA and both of the own vehicle 100 and the crossing target 200 are moving. Thus, when none of the above-mentioned conditions is satisfied, whether or not the avoidance condition is satisfied is determined.

The avoidance condition is satisfied when a predetermined condition is satisfied. The predetermined condition is set based on an own vehicle passage predicted time which is a predicted time taken by the own vehicle 100 to pass beyond the intersecting region CA and a crossing target reaching predicted time which is a predicted time taken by the crossing target 200 to reach the intersecting region CA. In the at least one embodiment, the avoidance condition is satisfied when a condition that the own vehicle passage predicted time is shorter than the crossing target reaching predicted time is satisfied. That is, when the avoidance condition is satisfied, it is predicted that the own vehicle 100 first passes beyond the intersecting region CA and the crossing target 200 then reaches the intersecting region CA.

Moreover, in the at least one embodiment, the own vehicle passage predicted time is a predicted time taken by the own vehicle 100 to pass beyond the intersecting region CA from the current position when it is assumed that the own vehicle 100 finishes the automatic brake control at the current time and maintains the current speed. Moreover, the crossing target reaching predicted time is a predicted time taken by the crossing target 200 to reach the intersecting region CA from the current position when it is assumed that the crossing target 200 accelerates from the current speed at a predetermined acceleration and a predetermined acceleration gradient.

The acceleration set for the crossing target 200 varies depending on the type of the crossing target 200. Similarly, the acceleration gradient set for the crossing target 200 also varies depending on the type of the crossing target 200. For example, when the crossing target 200 is a vehicle, a two-wheeled vehicle, or a bicycle, the acceleration to be set is 3 m/sec.$^2$, and the acceleration gradient to be set is 3 m/sec.$^3$.

When the vehicle control ECU 10 is to determine whether or not the avoidance condition is satisfied, the vehicle control ECU 10 can execute, for example, the following calculation.

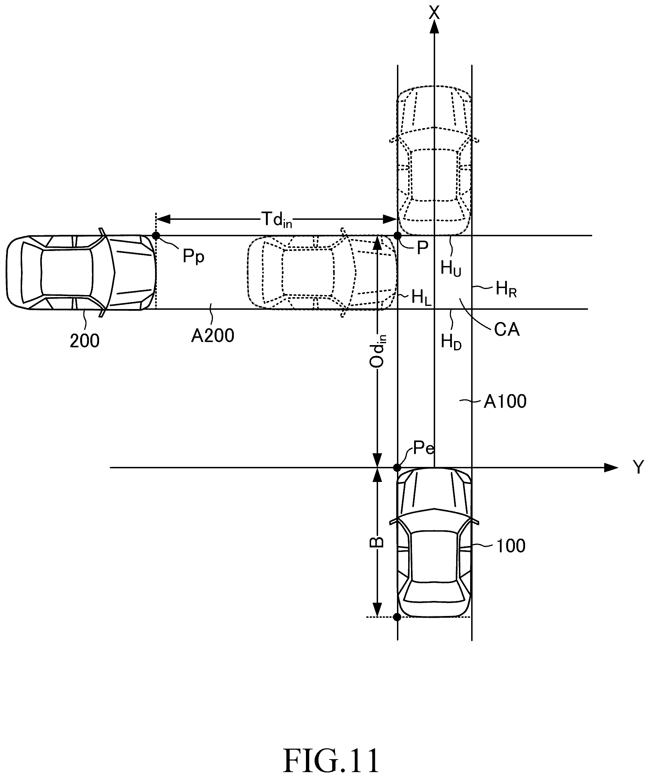

FIG. 11 shows a positional relationship between the own vehicle 100 and the crossing target 200 at a certain time during the execution of the automatic brake control. In the example of FIG. 11, the predicted travel region A100 of the own vehicle 100 and the predicted movement region A200 of the crossing target 200 are orthogonal to each other. Thus, the intersecting region CA is a quadrangle. Moreover, the crossing target 200 is moving such that the crossing target 200 enters the intersecting region CA from the left side of the own vehicle 100. Thus, the crossing target 200 enters the intersecting region CA from an edge $H_L$ which is out of four edges surrounding the intersecting region CA and exists on the left side, passes through the intersecting region CA, and exits from an edge $H_R$ on the right side. Moreover, the own vehicle 100 enters the intersecting region CA from an edge $H_D$ which is out of the four edges surrounding the intersecting region CA and exists on the lower side, passes through the intersecting region CA, and exits from an edge $H_U$ on the upper side.

An intersection of the edge $H_L$ from which the crossing target 200 enters the intersecting region CA and the edge $H_U$ from which the own vehicle 100 exits the intersecting region CA is defined as collision avoidance point P. The collision avoidance point P is a point included in both of the edge $H_L$ from which the crossing target 200 enters the intersecting region CA and the edge $H_U$ from which the own vehicle 100 exits the intersecting region CA.

A distance $L_1$ traveled by the own vehicle 100 from the current position of FIG. 11 to pass beyond the intersecting region CA is given by Equation (1).

$$L_1 = Od_{in} + B \qquad (1)$$

$Od_{in}$ is a distance between a position Pe of the front end (left front end) of the own vehicle 100 at the current time and the collision avoidance point P, and B is an overall length of the own vehicle 100.

Moreover, when the own vehicle 100 finishes the automatic brake control at the current time, the own vehicle 100 travels at the speed at the current time. Thus, when the speed (current speed) of the own vehicle 100 at the current time is represented by an own vehicle speed $V_e$, a time $T_1$ required for the own vehicle 100 to travel over the distance $L_1$ from the current position is given by Equation (2).

$$T_1 = \frac{L_1}{V_e} = \frac{Od_{in} + B}{V_e} \qquad (2)$$

The time $T_1$ given by Equation (2) is the own vehicle passage predicted time.

Moreover, in FIG. 11, a distance traveled by the crossing target 200 from the current position of FIG. 11 to reach the intersecting region CA is represented by $Td_{in}$, and a speed (current speed) of the crossing target 200 at the current time is represented by $V_p$. The distance $Td_{in}$ is a distance from a position Pp of a front end (left front end) of the crossing target 200 at the current time and the collision avoidance point P. When the crossing target 200 travels while accelerating at an acceleration $\alpha_p$ and an acceleration gradient $\gamma_p$ from the current position of FIG. 11, a distance $L_2$ traveled by the crossing target 200 in a time "t" from the current time is given by Equation (3).

$$L_2 = V_p t + \frac{1}{2}\alpha_p t^2 + \frac{1}{3}\gamma t^3 \qquad (3)$$

The distance $L_2$ is calculated such that each "t" of Equation (3) is changed by a minute time, to thereby obtain "t" at which the distance $L_2$ is equal to the distance $Td_{in}$. The value "t" obtained in this manner is the crossing target reaching predicted time $T_2$.

The vehicle control ECU 10 uses Equation (2) to calculate the own vehicle passage predicted time $T_1$, and uses Equation (3) to calculate the crossing target reaching predicted time $T_2$. After that, the vehicle control ECU 10 compares the calculated own vehicle passage predicted time $T_1$ and crossing target reaching predicted time $T_2$ with each other. When the own vehicle passage predicted time $T_1$ is shorter than the crossing target reaching predicted time $T_2$, the vehicle control ECU 10 determines that the avoidance condition is satisfied. In this case, even when the crossing target 200 travels while accelerating, there is such a degree of margin for avoiding the collision between the own vehicle 100 and the crossing target 200 that the own vehicle 100 first passes beyond the intersecting region CA. Thus, in this case, the vehicle control ECU 10 determines that the control finish condition for the automatic brake control is satisfied even when the crossing target 200 is moving at a position before passing beyond the intersecting region CA.

As described above, the vehicle control ECU 10 determines whether or not the avoidance condition is satisfied when the position of the crossing target 200 is a position before reaching the intersecting region CA (that is, the position of the crossing target 200 is a position before crossing the predicted travel region A100 of the own vehicle 100) and both of the own vehicle 100 and the crossing target 200 are moving. When this avoidance condition is satisfied, the vehicle control ECU 10 determines that the control finish condition is satisfied. With this configuration, in such a situation that the crossing target 200 is moving while reducing the speed in order to allow the own vehicle 100 to first pass beyond the intersecting region CA before the intersecting region CA, the automatic brake control is finished. Thus, it is possible to suppress the unnecessary continuation of the activation of the automatic brake control even when the crossing target 200 is moving at a low speed while reducing the speed before the intersecting region CA. It is also possible to avoid the collision between the own vehicle 100 and the crossing target 200 in the intersecting region CA even when the crossing target 200 accelerates.

(Specific Operation)

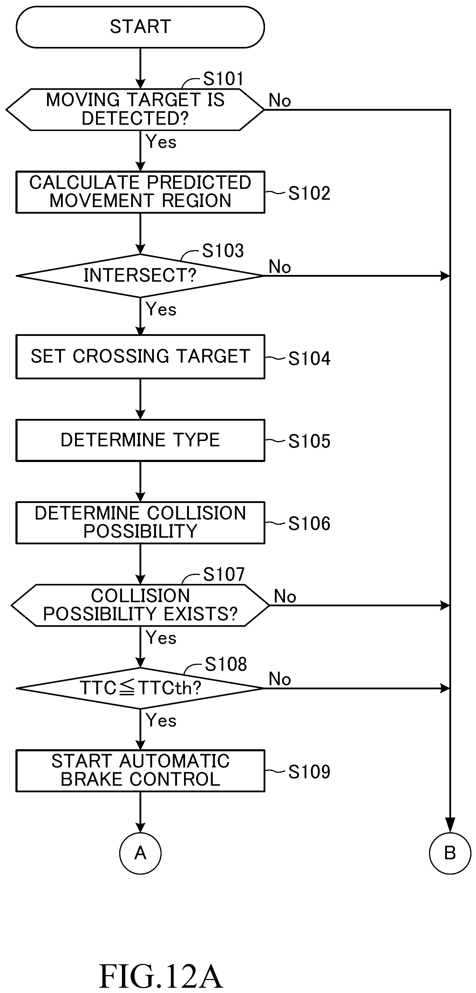

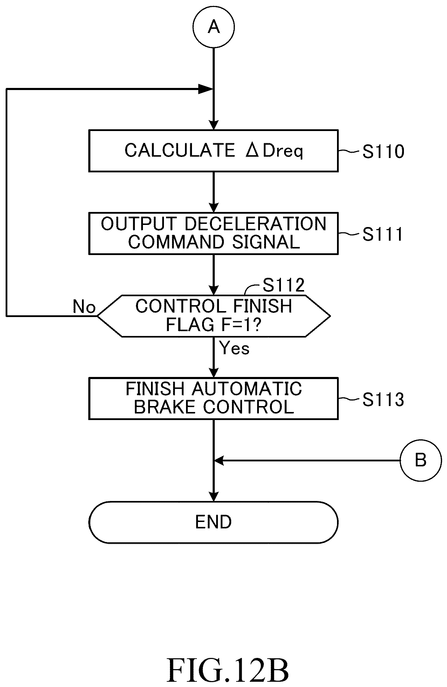

FIG. 12A and FIG. 12B are flowcharts for illustrating an example of an automatic brake control program executed by the CPU 11 (processor) of the vehicle control ECU 10 to execute the automatic brake control. This program is repeatedly executed at a predetermined short time interval during the travel of the own vehicle 100.

When the automatic brake control program is started, the CPU 11 first determines whether or not a moving target is detected in the front region or the front lateral regions of the own vehicle 100 in Step 101 (hereinafter Step is abbreviated as "S") of FIG. 12A. When the CPU 11 detects a moving target in none of the front region and the front lateral regions of the own vehicle 100 (No in S101), the CPU 11 temporarily finishes this program. Meanwhile, when the CPU 11 detects a moving target in the front region or the front lateral regions of the own vehicle 100 (Yes in S101), the processing executed by the CPU 11 proceeds to S102.

In S102, the CPU 11 calculates the predicted movement region of the detected moving target. After that, the CPU 11 determines whether or not the calculated predicted movement region of the moving target intersects with the predicted travel region A100 of the own vehicle 100 (S103). For example, the CPU 11 can determine whether or not the predicted movement region of the moving target intersects with the predicted travel region A100 of the own vehicle 100 based on whether or not the intersecting region of the predicted movement region of the moving target and the predicted travel region A100 of the own vehicle 100 is formed on the X-Y coordinate plane of FIG. 5.

When the predicted movement region of the moving target does not intersect with the predicted travel region A100 of the own vehicle 100 (No in S103), the own vehicle 100 does not collide with the moving target. Thus, in this case, the CPU 11 temporarily finishes this program. Meanwhile, when the predicted movement region of the moving target intersects with the predicted travel region A100 of the own vehicle 100 (Yes in S103), the processing proceeds to S104.

In S104, the CPU 11 sets the detected moving target as the crossing target 200. After that, the CPU 11 determines the type of the crossing target 200 (S105). In this case, the CPU 11 can determine the type of the crossing target 200 based on the information acquired from the front camera sensor 262a. For example, the CPU 11 determines whether the crossing target 200 is a vehicle, a two-wheeled vehicle, a bicycle, or a pedestrian in S105.

After that, the CPU 11 executes collision possibility determination processing (S106). In this case, the CPU 11 calculates positions at which the own vehicle 100 and the crossing target 200 probably exist each time the minute time elapses from the current time when the own vehicle 100 and the crossing target 200 maintain the current speeds and accelerations. The CPU 11 compares a relationship between the calculated position at which the own vehicle 100 probably exists and the calculated position at which the crossing target 200 probably exists each time the minute time elapses, to thereby determine whether or not the prediction that the own vehicle 100 and the crossing target 200 collide with each other is correct.

After that, the CPU 11 determines whether or not the prediction of the collision between the own vehicle 100 and the crossing target 200 is determined as correct, that is, whether or not the collision possibility exists (S107). When it is not determined that the prediction of the collision is correct (it is not determined that the collision possibility exists) (No in S107), the CPU 11 temporarily finishes this program. Meanwhile, when it is determined that the prediction of the collision is correct (it is determined that the collision possibility exists) (Yes in S107), the processing proceeds to S108.

In S108, the CPU 11 determines whether or not the time TTC until the own vehicle 100 and the crossing target 200 collide with each other is equal to or shorter than the predetermined threshold time TTCth set in advance. When the time TTC is longer than the threshold time TTCth (No in S108), the CPU 11 temporarily finishes this program. When the time TTC is equal to or shorter than the threshold time TTCth (Yes in S108), the CPU 11 determines that the probability of the collision between the own vehicle 100 and the crossing target 200 is high. Thus, the processing proceeds to S109.

In S109, the CPU 11 starts the automatic brake control. After that, the CPU 11 calculates a requested deceleration ΔDreq (S110). The requested deceleration ΔDreq may be a fixed value or a variable value. After that, the processing proceeds to S111.

In S111, the CPU 11 outputs, to the braking ECU 41, a deceleration command signal for controlling the braking actuator 42 so that the deceleration of the own vehicle 100 matches the requested deceleration ΔDreq. As a result, the braking ECU 41 controls the braking actuator 42 so that the deceleration matches the requested deceleration ΔDreq. Thus, the own vehicle 100 decelerates. After that, the processing proceeds to S112.

In S112, the CPU 11 determines whether or not a control finish flag F is set to 1. The control finish flag F is set to 1 when the control finish condition for the automatic brake control is satisfied, and is set to 0 when the control finish condition is not satisfied. When the CPU 11 determines that the control finish flag F is not set to 1 in S112, that is, the control finish flag F is set to 0 (No in S112), the CPU 11 determines that the control finish condition for the automatic brake control is not satisfied. Thus, the processing returns to S110. In this case, the CPU 11 again calculates the requested deceleration ΔDreq (S110), and outputs the deceleration command signal (S111). As a result, the automatic brake control is continued. Meanwhile, when the CPU 11 determines that the control finish flag F is set to 1 in S112 (Yes in S112), the CPU 11 determines that the control finish condition for the automatic brake control is satisfied. Thus, the processing proceeds to S113. In S113, the CPU 11 finishes the automatic brake control. As a result, the forced deceleration of the own vehicle 100 is finished. After that, the CPU 11 temporarily finishes this program.

When the time TTC becomes equal to or shorter than the threshold time TTCth as a result of the CPU 11 executing the above-mentioned automatic brake control program, that is, it is determined that the probability of the collision between the own vehicle 100 and the crossing target 200 is high, the automatic brake control is started. As a result, the own vehicle 100 is decelerated. Moreover, when the control finish flag F is not set to 1 during the execution of the automatic brake control, it is determined that the control finish condition is not satisfied. Thus, the automatic brake control is continued. When the control finish flag F is set to 1 during the execution of the automatic brake control, it is determined that the control finish condition is satisfied. Thus, the execution of the automatic brake control is finished.

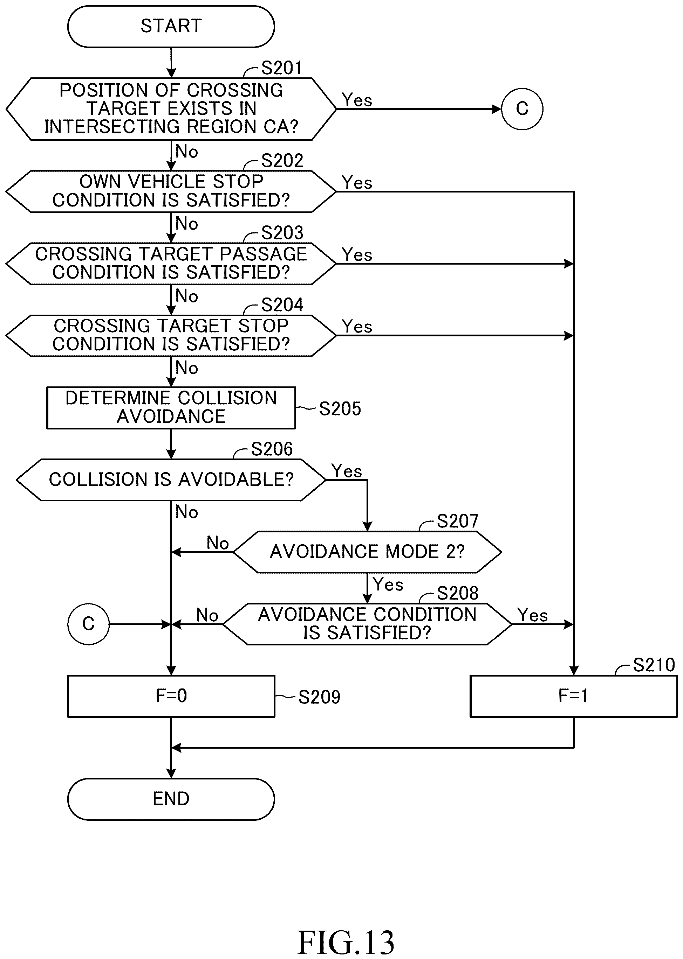

FIG. 13 is a flowchart for illustrating an example of a control finish condition determination program executed by the CPU 11 of the vehicle control ECU 10 to set the control finish flag F. This program is executed when the automatic brake control is started in S109 of FIG. 12A. When the execution of this program is started, the CPU 11 first determines whether or not the position of the crossing target 200 exists in the intersecting region CA in S201 of FIG. 13. In this case, the CPU 11 can determine whether or not the position of the crossing target 200 exists in the intersecting region CA based on the relationship between the position of the crossing target 200 and the position of the intersecting region CA.

When the position of the crossing target 200 exists in the intersecting region CA (Yes in S201), the processing proceeds to S209. In S209, the CPU 11 determines that the control finish condition is not satisfied, and hence sets the control finish flag F to 0. After that, the CPU 11 temporarily finishes this program. Meanwhile, when the position of the crossing target 200 does not exist in the intersecting region CA (No in S201), the processing proceeds to S202. In S202, the CPU 11 determines whether or not the own vehicle stop condition is satisfied.

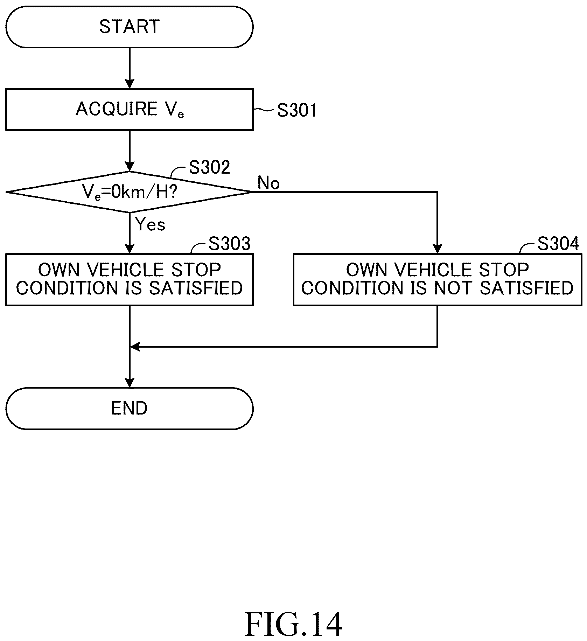

FIG. 14 is a flowchart for illustrating an example of an own vehicle stop condition determination program executed by the CPU 11 of the vehicle control ECU 10 to determine whether or not the own vehicle stop condition is satisfied. When the execution of this program is started, the CPU 11 acquires the own vehicle speed $V_e$ in S301 of FIG. 14. After that, the CPU 11 determines whether or not the own vehicle speed $V_e$ is 0 km/H, that is, the own vehicle 100 is stopped (S302). When the own vehicle speed $V_e$ is not 0 km/H (No in S302), the processing proceeds to S304. Meanwhile, when the own vehicle speed $V_e$ is 0 km/H (Yes in S302), the processing proceeds to S303.

In S303, the CPU 11 determines that the own vehicle stop condition is satisfied. After that, the CPU 11 finishes this program. Moreover, in S304, the CPU 11 determines that the own vehicle stop condition is not satisfied. After that, the CPU 11 finishes this program.

The CPU 11 executes the own vehicle stop condition determination program described above, to thereby determine that the own vehicle stop condition is satisfied when the own vehicle 100 is stopped and determine that the own vehicle stop condition is not satisfied when the own vehicle 100 is moving.

When the CPU 11 determines that the own vehicle stop condition is satisfied in S202 of FIG. 13 (Yes in S202), the processing proceeds to S210. In S210, the CPU 11 determines that the control finish condition is satisfied as a result of the own vehicle stop condition being satisfied, and sets the control finish flag F to 1. After that, the CPU 11 finishes this program. Meanwhile, when the CPU 11 determines that the own vehicle stop condition is not satisfied in S202 (No in S202), that is, the own vehicle 100 is moving, the processing proceeds to S203. In S203, the CPU 11 determines whether or not the crossing target passage condition is satisfied.

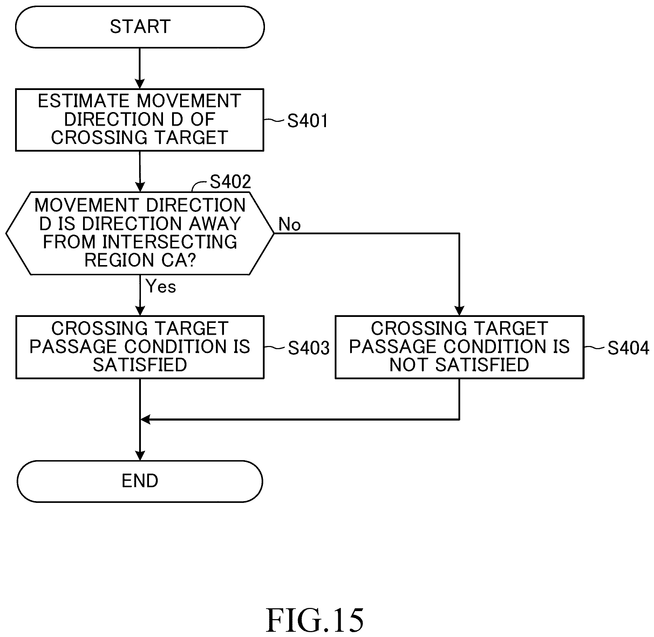

FIG. 15 is a flowchart for illustrating an example of a crossing target passage condition determination program executed by the CPU 11 of the vehicle control ECU 10 to determine whether or not the crossing target passage condition is satisfied. When the execution of this program is started, the CPU 11 estimates a movement direction D of the crossing target 200 in S401 of FIG. 15. In this case, for example, the CPU 11 obtains the speed vector of the crossing target 200 based on the relative distance and the relative speed between the crossing target 200 and the own vehicle 100 and the orientation in which the crossing target 200 exists. The CPU 11 can estimate the movement direction D of the crossing target 200 from the obtained direction of the speed vector of the crossing target 200.

After that, the CPU 11 determines whether or not the movement direction D of the crossing target 200 is a direction away from the intersecting region CA (S402). This determination can be made based on, for example, a relationship between the movement direction D of the crossing target 200 and the position of the intersecting region CA.

When the movement direction D of the crossing target 200 is a direction away from the intersecting region CA (Yes in S402), the CPU 11 determines that the crossing target 200 has passed beyond the intersecting region CA at a time before the current time, and hence the movement direction D of the crossing target 200 is a direction away from the intersecting region CA as illustrated in FIG. 6. That is, the CPU 11 determines that the crossing target 200 has already passed beyond the intersecting region CA. In this case, the processing proceeds to S403. In S403, the CPU 11 determines that the crossing target passage condition is satisfied. After that, the CPU 11 finishes this program. Meanwhile, when the movement direction D of the crossing target 200 is not a direction away from the intersecting region CA (No in S402), the CPU 11 determines that the crossing target 200 has not yet passed beyond the intersecting region CA. In this case, the processing proceeds to S404. In S404, the CPU 11 determines that the crossing target passage condition is not satisfied.

After that, the CPU 11 finishes this program.

The CPU 11 executes the crossing target passage condition determination program described above, to thereby determine that the crossing target passage condition is satisfied when the crossing target 200 has already passed beyond the intersecting region CA and determine that the crossing target passage condition is not satisfied when the crossing target 200 has not yet passed beyond the intersecting region CA.

When the CPU 11 determines that the crossing target passage condition is satisfied in S203 of FIG. 13 (Yes in S203), the CPU 11 determines that the control finish condition is satisfied as a result of the crossing target passage condition being satisfied, and sets the control finish flag F to 1 in S210. After that, the CPU 11 finishes this program. Meanwhile, when the CPU 11 determines that the crossing target passage condition is not satisfied in S203 (No in S203), the processing proceeds to S204. In S204, the CPU 11 determines whether or not the crossing target stop condition is satisfied.

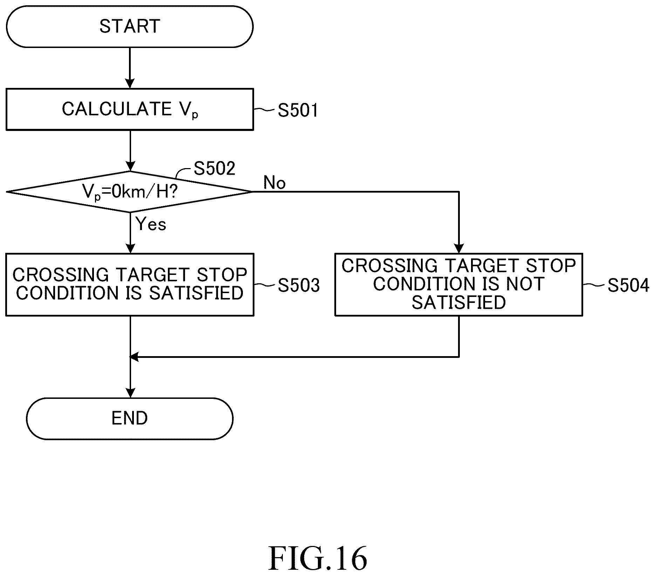

FIG. 16 is a flowchart for illustrating an example of a crossing target stop condition determination program executed by the CPU 11 of the vehicle control ECU 10 to determine whether or not the crossing target stop condition is satisfied. When the execution of this program is started, the CPU 11 calculates the speed $V_p$ of the crossing target 200 in S501 of FIG. 16. After that, the CPU 11 determines whether or not the speed $V_p$ of the crossing target 200 is 0 km/H, that is, the crossing target 200 is stopped (S502). When the speed $V_p$ of the crossing target 200 is not 0 km/H (No in S502), the processing proceeds to S504. In S504, the CPU 11 determines that the crossing target stop condition is not satisfied. After that, the CPU 11 finishes this program. Meanwhile, when the speed $V_p$ of the crossing target 200 is 0 km/H (Yes in S502), the processing proceeds to S503. In S503, the CPU 11 determines that the crossing target stop condition is satisfied. After that, the CPU 11 finishes this program.

The CPU 11 executes the crossing target stop condition determination program described above, to thereby determine that the crossing target stop condition is satisfied when the crossing target 200 is stopped and determine that the crossing target stop condition is not satisfied when the crossing target 200 is moving. The case in which the CPU 11 executes the crossing target stop condition determination program of FIG. 16 is a case in which the position of the crossing target 200 does not exist in the intersecting region CA and the crossing target passage condition is not satisfied, that is, the crossing target 200 has not passed beyond the intersecting region CA. Thus, the case in which it is determined, through the execution of this program, that the crossing target stop condition is satisfied is the case in which the crossing target 200 is stopped before reaching the intersecting region CA. Moreover, the case in which it is determined, through execution of this program, that the crossing target stop condition is not satisfied is the case in which the crossing target 200 is moving at a position before reaching the intersecting region CA.

When the CPU 11 determines that the crossing target stop condition is satisfied in S204 of FIG. 13 (Yes in S204), the CPU 11 determines that the control finish condition is satisfied as a result of the crossing target stop condition being satisfied. Thus, in S210, the CPU 11 sets the control finish flag F to 1. After that, the CPU 11 finishes this program. Meanwhile, when the CPU 11 determines that the crossing target stop condition is not satisfied in S204 (No in S204), the processing proceeds to S205. In S205, the CPU 11 executes collision avoidance determination processing. As illustrated in FIG. 8, FIG. 9, and FIG. 10, this collision avoidance determination processing is processing of determining whether or not the own vehicle 100 and the crossing target 200 collide with each other in the intersecting region CA based on the transitions of the predicted position (own vehicle predicted position) of the own vehicle 100 and the predicted position (crossing target predicted position) of the crossing target 200 calculated each time the minute time elapses from the current time.

After the CPU 11 executes the collision avoidance determination processing in S205, the processing proceeds to S206. In S206, the CPU 11 determines whether or not the collision between the own vehicle 100 and the crossing target 200 is avoidable based on a result of the collision avoidance determination processing. When the collision is unavoidable (No in S206), the processing proceeds to S209. In S209, the CPU 11 determines that the control finish condition is not satisfied, and sets the control finish flag F to 0. After that, the CPU 11 finishes this program.

When the CPU 11 determines that the collision is avoidable in S206 (Yes in S206), the processing proceeds to S207. In S207, the CPU 11 determines whether or not the collision avoidance mode is the avoidance mode 2. That is, the CPU 11 determines, through the collision avoidance determination processing, whether or not it is predicted that the collision is avoided by the crossing target 200 reaching the intersecting region CA after the own vehicle 100 has passed beyond the intersecting region CA as illustrated in FIG. 10. When the collision avoidance mode is not the avoidance mode 2, that is, the collision avoidance mode is the avoidance mode 1 of FIG. 9 (No in 207), the CPU 11 determines that the control finish condition is not satisfied. Thus, the CPU 11 sets the control finish flag F to 0 (S209). After that, the CPU 11 finishes this program.

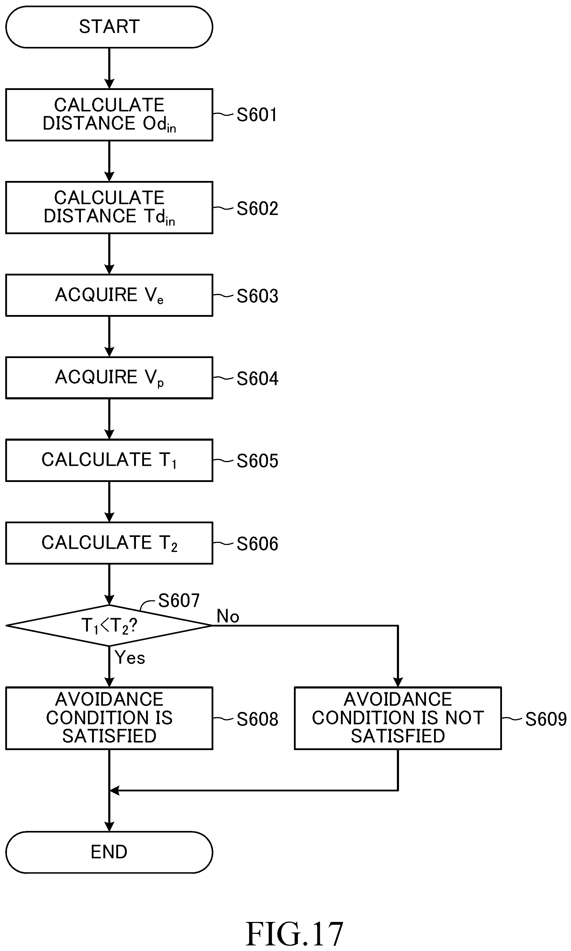

When the collision avoidance mode is the avoidance mode 2 (Yes in S207), the processing proceeds to S208. In S208, the CPU 11 determines whether or not the avoidance condition is satisfied. FIG. 17 is a flowchart for illustrating an example of an avoidance condition determination program executed by the CPU 11 of the vehicle control ECU 10 to determine whether or not the avoidance condition is satisfied. When the execution of this program is started, the CPU 11 calculates the distance $Od_{in}$ in S601 of FIG. 17. For example, when the own vehicle 100 and the crossing target 200 move as illustrated in FIG. 11, the CPU 11 can calculate, as the distance $Od_{in}$, the distance in the X-axis direction between the position Pe of the left front end of the own vehicle 100 existing at the current position and the collision avoidance point P.

After that, the CPU 11 calculates the distance $Td_{in}$ (S602). For example, when the own vehicle 100 and the crossing target 200 move as illustrated in FIG. 11, the CPU 11 can calculate, as the distance $Td_{in}$, the distance in the Y-axis direction between the position Pp of the left front end of the crossing target 200 existing at the current position and the collision avoidance point P.

After that, the CPU 11 acquires the own vehicle speed $V_e$ at the current time (S603), and further acquires the speed $V_p$ of the crossing target 200 at the current time (S604).

After that, the CPU 11 calculates the own vehicle passage predicted time $T_1$ (S605). The own vehicle passage predicted time $T_1$ is the time taken to pass beyond the intersecting region CA (specifically, the collision avoidance point P of the intersecting region CA) from the current position when it is assumed that the own vehicle 100 maintains the current speed (speed $V_e$) (that is, the automatic brake control is finished at the current time). The own vehicle passage predicted time $T_1$ can be calculated as given by Equation (2). In Equation (2), the overall length B of the own vehicle 100 is stored in advance.

After that, the CPU 11 calculates the crossing target reaching predicted time $T_2$ (S606). The crossing target reaching predicted time $T_2$ is the time taken to reach the intersecting region CA (specifically, the collision avoidance point P of the intersecting region CA) when it is assumed that the crossing target 200 travels while accelerating at the acceleration $\alpha_p$ and the acceleration gradient $\gamma_p$ from the state of the travel at the current position at the speed $V_p$. The crossing target reaching predicted time $T_2$ can be calculated as given by Equation (3). The acceleration $\alpha_p$ and the acceleration gradient $\gamma_p$ are appropriately set for each type of the crossing target 200 determined in S105, and those values are stored in advance in the ROM 12. Thus, the CPU 11 reads out the acceleration $\alpha_p$ and the acceleration gradient $\gamma_p$ corresponding to the type of the crossing target 200 from the ROM 12, and uses the read-out acceleration $\alpha_p$ and acceleration gradient $\gamma_p$ to calculate the crossing target reaching predicted time $T_2$.

After that, the CPU 11 determines whether or not the own vehicle passage predicted time $T_1$ is shorter than the crossing target reaching predicted time $T_2$ (S607). When the own vehicle passage predicted time $T_1$ is shorter than the crossing target reaching predicted time $T_2$ (Yes in S607), the CPU 11 determines that the own vehicle 100 first passes beyond the intersecting region CA, and the crossing target 200 traveling while accelerating at the predetermined acceleration $\alpha_p$ and acceleration gradient $\gamma_p$ then reaches the intersecting region CA even when the automatic brake control is finished at the current time. In this case, the CPU 11 determines that the avoidance condition is satisfied (S608). After that, the CPU 11 finishes this program. Meanwhile, when the own vehicle passage predicted time $T_1$ is equal to or longer than the crossing target reaching predicted time $T_2$ (No in S607), the CPU 11 determines that the crossing target 200 traveling while accelerating at the predetermined acceleration $\alpha_p$ and acceleration gradient $\gamma_p$ enters the intersecting region CA before the own vehicle 100 passes beyond the intersecting region CA when the automatic brake control is finished at the current time. In this case, the CPU 11 determines that there is a possibility of a collision between the own vehicle 100 and the crossing target 200 with each other in the intersecting region CA when the automatic brake control is finished at the current time, and hence determines that the avoidance condition is not satisfied (S609). After that, the CPU 11 finishes this program.

The CPU 11 executes the avoidance condition determination program described above, to thereby determine that the avoidance condition is satisfied when the own vehicle passage predicted time $T_1$ is shorter than the crossing target reaching predicted time $T_2$ and determine that the avoidance condition is not satisfied when the own vehicle passage predicted time $T_1$ is equal to or longer than the crossing target reaching predicted time $T_2$.

When the CPU 11 determines that the avoidance condition is satisfied in S208 of FIG. 13 (Yes in S208), the CPU 11 determines that the control finish condition is satisfied as a result of the avoidance condition being satisfied. Thus, in S210, the CPU 11 sets the control finish flag F to 1. After that, the CPU 11 finishes this program. Meanwhile, when the CPU 11 determines that the avoidance condition is not satisfied in S208 (No in S208), the CPU 11 determines that the control finish condition is not satisfied. Thus, the CPU 11 sets the control finish flag F to 0 (S209). After that, the CPU 11 finishes this program.

When the own vehicle stop condition is satisfied, the crossing target passage condition is satisfied, or the crossing target stop condition is satisfied as a result of the CPU 11 executing the control finish condition determination program of FIG. 13, the automatic brake control is finished. Moreover, when the own vehicle stop condition is not satisfied, the crossing target passage condition is not satisfied, and the crossing target stop condition is not satisfied, it is determined whether or not the avoidance condition is satisfied. After that, when the avoidance condition is satisfied, the automatic brake control is finished.

As described above, according to the at least one embodiment, the avoidance condition is included in the control finish condition for the automatic brake control. It is determined whether or not this avoidance condition is satisfied when the position of the crossing target 200 is at a position before reaching the intersecting region CA and the own vehicle 100 and the crossing target 200 are moving. Moreover, the avoidance condition is satisfied when the condition set based on the predicted time taken by the own vehicle 100 to pass beyond the intersecting region CA (own vehicle passage predicted

time $T_1$) and the predicted time taken by the crossing target 200 to reach the intersecting region CA (crossing target reaching predicted time $T_2$) is satisfied. In the at least one embodiment, the avoidance condition is satisfied when the own vehicle passage predicted time $T_1$ is shorter than the crossing target reaching predicted time $T_2$. When the avoidance condition is satisfied, it is predicted that the own vehicle 100 first passes beyond the intersecting region CA, and the crossing target 200 then reaches the intersecting region CA even when the automatic brake control is finished at the current time. Thus, it is predicted that the collision between the own vehicle 100 and the crossing target 200 in the intersecting region CA is avoided. Therefore, it is possible to suppress, by finishing the automatic brake control in this case, the unnecessary continuation of the automatic brake control at the time when the crossing target 200 is moving at a position before reaching the intersecting region CA while the collision between the own vehicle 100 and the crossing target 200 in the intersecting region CA is avoided.

The at least one embodiment of the present disclosure has been described above, but the technical idea described in the present disclosure should not be limited to that of the above-mentioned at least one embodiment. For example, the vehicle control device according to the at least one embodiment of the present disclosure can be configured as described in the following modification examples.

(Modification Example 1)

The crossing target reaching predicted time used to determine whether or not the avoidance condition is satisfied may be a time taken by the crossing target to reach the intersecting region CA from the current position when it is assumed that the crossing target maintains the current speed. Moreover, when the crossing target is a pedestrian, the vehicle control ECU 10 may calculate, as the crossing target reaching predicted time, the time taken by the crossing target to reach the intersecting region CA from the current position when it is assumed that the crossing target maintains the current speed (that is, the acceleration and the acceleration gradient are 0).

(Modification Example 2)

The crossing target reaching predicted time may be a time taken by the crossing target to reach the intersecting region CA from the current position when it is assumed that the crossing target accelerates at a predetermined acceleration from the current speed. That is, the crossing target reaching predicted time may be calculated without setting the acceleration gradient for the crossing target.

(Modification Example 3)

In a case in which the crossing target is accelerating when it is determined whether or not the avoidance condition is satisfied, it may be determined that the avoidance condition is not satisfied.

(Modification Example 4)

The intersecting angle between the predicted travel region of the own vehicle and the predicted movement region of the crossing target may not be 90 degrees. That is, the predicted movement region of the crossing target may obliquely intersect with the predicted travel region of the own vehicle.

(Modification Example 5)

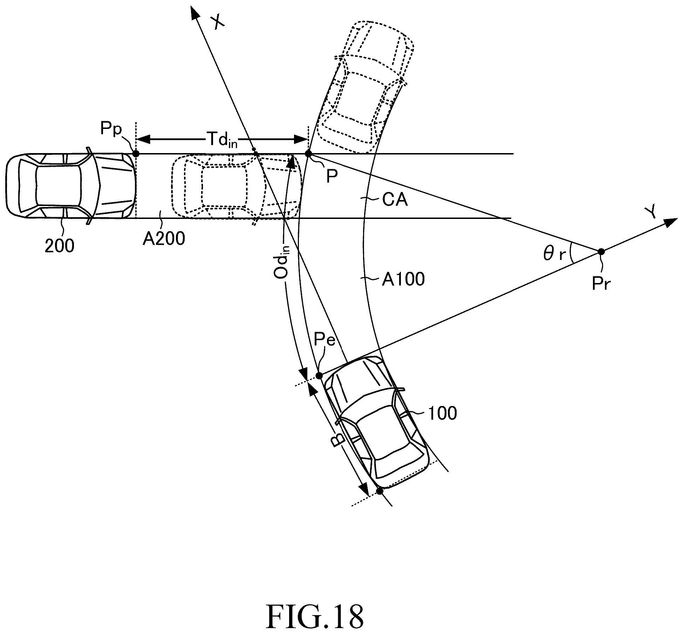

One or both of the predicted travel region of the own vehicle and the predicted movement region of the crossing target may be in a curved shape. FIG. 18 shows an example in which the predicted travel region A100 of the own vehicle 100 is in an arc shape and the predicted movement region A200 of the crossing target 200 is in a straight-line shape. As illustrated in FIG. 18, the distance $Od_{in}$ from the position Pe of the left front end of the own vehicle 100 to the collision avoidance point P is a length of a curve in an arc shape. In this case, the vehicle control ECU 10 calculates coordinates of a turning center Pr of the own vehicle 100 based on the yaw rate $Y_e$ or the steering angle $\theta_e$, calculates a turning radius Ra, which is a distance from the turning center Pr to the position Pe of the left front end of the own vehicle 100, and further calculates a turning angle $\theta r$ of the own vehicle 100 until the own vehicle 100 passes through the collision avoidance point P from the current position. After that, the vehicle control ECU 10 can calculate the distance $Od_{in}$ based on the turning angle $\theta r$ and the turning radius Ra.

As described above, the technical idea according to the present disclosure can be modified without departing from the scope of the claims.

**Claims**

1. A vehicle control device (1), comprising:

   a braking device (40) configured to brake an own vehicle (100); and
   a control unit (10) configured to start deceleration control of controlling the braking device (40) such that the own vehicle (100) decelerates when the control unit (10) determines that a probability of collision between the own vehicle (100) and a crossing target (200) that is a target predicted to cross a predicted travel region (A100) of the own vehicle (100) is high, and to finish the deceleration control when a predetermined control finish condition is satisfied during the execution of the deceleration control,
   wherein the predetermined control finish condition includes an avoidance condition which is a condition satisfaction or dissatisfaction of which is determined when a position of the crossing target (200) is a position before crossing the predicted travel region (A100) of the own vehicle (100) and the own vehicle (100) and the crossing target(200) are moving, and which is satisfied when a predetermined condition is satisfied, the predetermined condition being set based on an own vehicle passage predicted time ($T_1$) that is a predicted time taken by the own vehicle (100) to pass beyond an intersecting region (CA), which is an intersection of the predicted travel region (A100) of the own vehicle (100) and a predicted movement region (A200) of the crossing target (200), and a crossing target reaching predicted time ($T_2$) that is a predicted time taken by the crossing target (200) to reach the intersecting region (CA).

2. The vehicle control device (1) according to claim 1, wherein the avoidance condition is a condition satisfied when the own vehicle passage predicted time ($T_1$) is shorter than the crossing target reaching predicted time ($T_2$).

3. The vehicle control device (1) according to claim 1,

   wherein the own vehicle passage predicted time ($T_1$) is a predicted time taken by the own vehicle (100) to pass beyond the intersecting region (CA) from a current position when it is assumed that the own vehicle (100) maintains a current speed,
   wherein the crossing target reaching predicted time ($T_2$) is a predicted time taken by the crossing target (200) to reach the intersecting region (CA) from a current position when it is assumed that the crossing target (200) executes predetermined acceleration from a current speed, and
   wherein the avoidance condition is a condition satisfied when the own vehicle passage predicted time ($T_1$) is shorter than the crossing target reaching predicted time ($T_2$).

4. The vehicle control device (1) according to claim 3, wherein the crossing target reaching predicted time ($T_2$) is a predicted time taken by the crossing target (200) to reach the intersecting region (CA) from the current position when it is assumed that the crossing target (200) executes acceleration at a predetermined acceleration ($\alpha_p$) and a predetermined acceleration gradient ($\gamma_p$) from the current speed.

5. The vehicle control device (1) according to claim 2,

   wherein the own vehicle passage predicted time ($T_1$) is a predicted time taken by the own vehicle (100) to pass beyond the intersecting region (CA) from a current position when it is assumed that the own vehicle (100) maintains a current speed, and
   wherein the crossing target reaching predicted time ($T_2$) is a predicted time taken by the crossing target (200) to reach the intersecting region (CA) from a current position when it is assumed that the crossing target (200) maintains a current speed.

6. The vehicle control device(1) according to any one of claims 1 to 5, wherein the predetermined control finish condition includes an own vehicle stop condition that is satisfied when the own vehicle (100) is stopped.

7. The vehicle control device (1) according to any one of claims 1 to 6, wherein the predetermined control finish condition includes a crossing target passage condition that is satisfied when the crossing target (200) has passed through the intersecting region (CA).

8. The vehicle control device (1) according to any one of claims 1 to 7, wherein the predetermined control finish condition includes a crossing target stop condition that is satisfied when the crossing target (200) stops before reaching the intersecting region (CA).

FIG.1

FIG.2

FIG.3

R100

A100

100

FIG.4

FIG.5

FIG.6

FIG.7

t=0.00sec.

CA

200

A200

A100

100

t=0.25sec.

CA

200  201

101

100

t=0.50sec.

CA

200  201

101

100

t=0.75sec.

CA

200  201

101

100

t=1.00sec.  201

CA

200

101

100

t=1.25sec.  201

200

101

100

# FIG.8

t=0.00sec.    CA

200    A200    A100

100

t=0.25sec.    CA

200  201

101

100

t=0.50sec.    CA

200    201

101

100

t=0.75sec.    201

200

101

100

t=1.00sec. CA    201

200

101

100

t=1.25sec. CA    201

200

101

100

# FIG.9

t=0.00sec.

CA

A200

A100

200

100

t=0.25sec.

CA

200  201

101

100

t=0.50sec.

CA

200  201

101

100

t=0.75sec.

101

200  201

100

t=1.00sec.

101

200  201

CA

100

t=1.25sec.

101

CA

200  201

100

FIG.10

FIG.11

START

S101
MOVING TARGET IS DETECTED? — No →

Yes

CALCULATE PREDICTED MOVEMENT REGION — S102

S103
INTERSECT? — No →

Yes

SET CROSSING TARGET — S104

DETERMINE TYPE — S105

DETERMINE COLLISION POSSIBILITY — S106

S107
COLLISION POSSIBILITY EXISTS? — No →

Yes

S108
TTC ≦ TTCth? — No →

Yes

START AUTOMATIC BRAKE CONTROL — S109

(A)          (B)

FIG.12A

FIG.12B

START

S201
POSITION OF CROSSING TARGET EXISTS IN INTERSECTING REGION CA? —Yes→ C

No

S202
OWN VEHICLE STOP CONDITION IS SATISFIED? —Yes→

No

S203
CROSSING TARGET PASSAGE CONDITION IS SATISFIED? —Yes→

No

S204
CROSSING TARGET STOP CONDITION IS SATISFIED? —Yes→

No

S205
DETERMINE COLLISION AVOIDANCE

S206
COLLISION IS AVOIDABLE? —Yes→

No

S207
←No— AVOIDANCE MODE 2?

Yes

S208
C →No— AVOIDANCE CONDITION IS SATISFIED? —Yes→

S209
F=0

S210
F=1

END

FIG.13

30

START

ACQUIRE $V_e$ ⌐S301

⌐S302

$V_e$=0km/H? — No

Yes

⌐S303

OWN VEHICLE STOP CONDITION IS SATISFIED

⌐S304

OWN VEHICLE STOP CONDITION IS NOT SATISFIED

END

FIG.14

START

ESTIMATE MOVEMENT
DIRECTION D OF
CROSSING TARGET ~S401

S402
MOVEMENT DIRECTION
D IS DIRECTION AWAY
FROM INTERSECTING
REGION CA?  No

Yes

CROSSING TARGET
PASSAGE CONDITION IS
SATISFIED ~S403

CROSSING TARGET
PASSAGE CONDITION IS
NOT SATISFIED ~S404

END

FIG.15

START

CALCULATE $V_p$ — S501

S502

$V_p = 0km/H?$ — No

Yes

CROSSING TARGET STOP CONDITION IS SATISFIED — S503

CROSSING TARGET STOP CONDITION IS NOT SATISFIED — S504

END

FIG.16

START

CALCULATE DISTANCE $Od_{in}$ — S601

CALCULATE DISTANCE $Td_{in}$ — S602

ACQUIRE $V_e$ — S603

ACQUIRE $V_p$ — S604

CALCULATE $T_1$ — S605

CALCULATE $T_2$ — S606

S607

$T_1 < T_2$?

No

Yes

AVOIDANCE CONDITION IS SATISFIED — S608

AVOIDANCE CONDITION IS NOT SATISFIED — S609

END

FIG.17

FIG.18

Europäisches
Patentamt

European
Patent Office

Office européen
des brevets

# EUROPEAN SEARCH REPORT

**Application Number**

EP 24 21 4909

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2014 006486 A1 (MANDO CORP [KR]) 6 November 2014 (2014-11-06) | 1,2,5,7 | INV. B60W30/095 B60W30/18 |
| Y | * paragraphs [0038] - [0041], [0044], [0052]; figures 4,5 * | 3,4,6,8 | |
| | ----- | | |
| X | US 2022/281482 A1 (YAMAZAKI TAKU [JP]) 8 September 2022 (2022-09-08) * paragraphs [0080] - [0082], [0087] - [0092]; figures 3,6 * | 1 | |
| | ----- | | |
| Y | CN 116 714 589 A (UNIV JILIN) 8 September 2023 (2023-09-08) * paragraphs [0196] - [0212]; figure 3b * | 3,4,6,8 | |
| | ----- | | |

TECHNICAL FIELDS
SEARCHED        (IPC)

B60W
B60T

The present search report has been drawn up for all claims

| Place of search | Date of completion of the search | Examiner |
|---|---|---|
| Munich | 6 May 2025 | Hernandez-Gallegos |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.......................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 21 4909

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2025

| Patent document cited in search report | Publication date | Patent family member(s) | | Publication date |
|---|---|---|---|---|
| DE 102014006486 A1 | 06-11-2014 | CN | 104134370 A | 05-11-2014 |
| | | DE | 102014006486 A1 | 06-11-2014 |
| | | KR | 20140131226 A | 12-11-2014 |
| | | US | 2014327532 A1 | 06-11-2014 |
| US 2022281482 A1 | 08-09-2022 | CN | 115092126 A | 23-09-2022 |
| | | JP | 7572266 B2 | 23-10-2024 |
| | | JP | 2022134536 A | 15-09-2022 |
| | | US | 2022281482 A1 | 08-09-2022 |
| CN 116714589 A | 08-09-2023 | NONE | | |

EPO FORM P0459

For more details about this annex : see Official Journal of the European Patent Office, No. 12/82

## REFERENCES CITED IN THE DESCRIPTION

**Patent documents cited in the description**

- JP 2018111335 A